(19) Europäisches Patentamt
European Patent Office
Office européen des brevets

(11) EP 2 246 377 B1

(12) **EUROPEAN PATENT SPECIFICATION**

(45) Date of publication and mention of the grant of the patent:
**27.08.2014 Bulletin 2014/35**

(21) Application number: **09709635.8**

(22) Date of filing: **13.02.2009**

(51) Int Cl.:
***C08F 299/06*** (2006.01) ***B41C 1/05*** (2006.01)
***B41N 1/12*** (2006.01) ***C08L 83/04*** (2006.01)

(86) International application number:
**PCT/JP2009/052436**

(87) International publication number:
**WO 2009/102035 (20.08.2009 Gazette 2009/34)**

(54) **RESIN COMPOSITION**

HARZZUSAMMENSETZUNG

COMPOSITION DE RÉSINE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **15.02.2008 JP 2008035030**

(43) Date of publication of application:
**03.11.2010 Bulletin 2010/44**

(73) Proprietor: **Asahi Kasei E-materials Corporation**
**Tokyo 101-8101 (JP)**

(72) Inventor: **SHIMURA, Tadashi**
**Tokyo 101-8101 (JP)**

(74) Representative: **Strehl Schübel-Hopf & Partner**
**Maximilianstrasse 54**
**80538 München (DE)**

(56) References cited:
**EP-A1- 1 223 192**
**JP-A- 61 097 318**
**JP-A- 2001 254 047**
**JP-A- 2003 183 572**
**JP-A- 2003 206 362**
**JP-A- 2005 212 144**
**US-A- 5 066 698**
**US-A- 5 650 467**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 246 377 B1

## Description

### Technical Field

The present invention relates to a resin composition, a laser-engraving original printing plate and a laser-engraved printing plate.

### Background Art

In recent years, the flexographic printing method has broadly been used as a method for printing on soft packages such as paper and film.

Particularly the flexographic printing method, used for printing on packaging materials such as corrugated boards, paper containers, paper bags and soft packaging films, building materials such as wall papers and decorative sheets, and labels, has been given much weight among various types of printing systems. For fabrication of printing plates used in flexographic printing, photosensitive resins are used in many cases. In fabrication of printing plates used in the flexographic printing method, first, a photomask is placed on a photosensitive resin, and light is directed through the photomask to cause the crosslinking reaction. Then, uncrosslinked portions are washed away with a developing liquid to obtain the printing plates.

As a fabrication method of printing plates, a technology called the so-called flexo CTP (Computer to Plate) is developed. Fabrication of printing plates by the flexo CTP increases from the viewpoint of effective fabrication of the printing plates.

In the flexo CTP, a thin light absorbing layer called a black layer is installed on a photosensitive resin surface; and a laser light is directed to the light absorbing layer to form a mask image directly on the photosensitive resin. Light is directed through the mask to subject the photosensitive resin to the crosslinking reaction; and thereafter, uncrosslinked portions being light-unirradiated portions are washed away with a developing liquid to obtain a printing plate.

However, the flexo CTP also needs a development step of washing away uncrosslinked portions with a developing liquid, so the efficiency-improving effect on fabrication of printing plates by the flexo CTP is limited.

Methods for more effectively manufacturing printing plates used in flexographic printing are demanded.

Such methods include a method of engraving original printing plates directly by a laser. The method can provide laser-engraved printing plates as printing plates used in letterpress printing represented by flexographic printing. The method has advantages including the reduction of plate making time and the decrease in wastes.

Patent Document 1 discloses a resin composition for a laser-engraving original printing plate to which a silicone oil is added.

Patent Document 2 discloses a laser-sensitive dampening water-unnecessary lithographic original printing plate characterized in that a photothermal conversion layer containing a compound for converting a laser light to heat, a polymeric compound having a film-forming capability, a photopolymerization initiator and an ethylenic unsaturated monomer, and a silicone rubber layer are laminated in this order, and after the formation of the silicone rubber layer, the laminate is flood exposed to an energy ray to allow the photothermal conversion layer to react with the silicone rubber layer.

Patent Document 1: WO 2005/070691
Patent Document 2: Japanese Patent Laid-Open No. 9-146264

EP 1223192 A1 discloses a silicone-containing film forming composition comprising a silanol group-bearing silicone resin and a (meth)acrylate polymer.

### Disclosure of the Invention

### Problems to be Solved by the Invention

However, it is still the present situation that no laser-engraved printing plate has been known which is sufficiently excellent in ink repellency and sufficiently suppresses the contamination of the printing plate with ink.

In the technology disclosed in Patent Document 1, with an increase of an addition amount of a silicone oil, the silicone oil does not mix homogeneously with other components and generates separation in some cases. Additionally, the technology disclosed in Patent Document 1 is not one in which the silicone oil is added as a component of a resin composition for a laser-engraving original printing plate, and does not introduce siloxane bonds in the resin.

The technology disclosed in Patent Document 2 is a dampening water-unnecessary lithographic original printing plate obtained by laminating a photothermal conversion layer and further a silicone rubber layer, and is different from

the incorporation of siloxane bonds into a resin; and the Patent Document 2 has no description on the suppression of the contamination of a printing plate with ink.

The problems to be solved by the invention are to provide a laser-engravable original printing plate from which a printing plate can efficiently be manufactured, and which is remarkably excellent in ink-contamination suppression and a laser-engraved printing plate.

Means for Solving the Problems

As a result of exhaustive studies to solve the above-mentioned problems, the present inventors have found that the utilization of a resin composition containing a resin containing siloxane bonds, whose incorporation is conventionally difficult because the siloxane bond is liable to generate the phase separation from other components, in the main chain and/or the side chain can provide a laser-engravable original printing plate and a laser-engraved printing plate which have an ink-contamination suppression effect; and this finding has led to the completion of the present invention.

That is, the present invention is as follows.

1. A resin composition comprising a resin (a1) having a siloxane bond, a number-average molecular weight of 500 or more and 300,000 or less and two or more -CO-NH- bonds, and a resin (a2) having no siloxane bond and having a number-average molecular weight of 1,000 or more and 300,000 or less.
2. The resin composition according to the above 1 or 2, wherein the resin (a1) has a polymerizable unsaturated group and has a number-average molecular weight of 1,300 or more and 300,000 or less, and the resin (a2) has a polymerizable unsaturated group.
3. The resin composition according to any one of the above 1 or 2, further comprising an organic compound (b) having a polymerizable unsaturated group and having a number-average molecular weight of less than 1,000.
4. The resin composition according to any one of the above 1 to 3, further comprising a photopolymerization initiator (c).
5. The resin composition according to any one of the above 1 to 4, wherein the resin (a1) has a repeating unit having a number-average molecular weight of 500 or more and 10,000 or less and having a siloxane bond.
6. The resin composition according to any one of the above 1 to 5, wherein the resin (a2) has a repeating unit having at least one bond selected from the group consisting of a carbonate bond, a urethane bond and an ester bond.
7. The resin composition according to any one of the above 3 to 6, wherein 20% by mass or more of the total amount of the organic compound (b) is at least one selected from the group consisting of alicyclic derivatives and aromatic derivatives.
8. The resin composition according to any one of the above 4 to 7, wherein the photopolymerization initiator (c) is at least one selected from the group consisting of hydrogen-abstraction-type photopolymerization initiators and disintegration-type photopolymerization initiators.
9. The resin composition according to any one of the above 1 to 8, wherein the resin composition is liquid at 20°C.
10. The resin composition according to any one of the above 1 to 9, further comprising inorganic microparticles having a number-average particle diameter of 0.01 μm or more and 10 μm or less.
11. A laser-engraving original printing plate which can be obtained by curing a resin composition according to any one of the above 1 to 10.
12. The laser-engraving original printing plate according to above 11, wherein a printing surface of the laser-engraving original printing plate is surface adjusted by at least one method selected from the group consisting of cutting, grinding and polishing.
13. A laser-engraved printing plate, obtained by laser engraving a laser-engraving original printing plate according to any one of the above 11 or 12.

Advantages of the Invention

The present invention can provide a resin composition excellent in ink repellency. The present invention can further provide a laser-engravable original printing plate and a laser-engraved printing plate which are remarkably excellent in the ink-contamination suppression effect, by using the resin composition.

Best Mode for Carrying Out the Invention

Hereinafter, the best mode (hereinafter, "the present embodiment") for carrying out the invention will be described in detail. The present invention is not limited to the following embodiment, and may be practiced by making various changes and modifications within the gist.

[Resin composition]

The resin composition according to the embodiment is a resin composition comprising a resin (a1) containing a siloxane bond, having a number-average molecular weight of 500 or more and 300,000 or less and having two or more -CO-NH- bonds, and a resin (a2) containing no siloxane bond and having a number-average molecular weight of 1,000 or more and 300,000 or less.

Owing to the resin composition containing the resin (a1) and the resin (a2), a laser-engravable original printing plate and a laser-engraved printing plate can be manufactured which are remarkably excellent in the ink-contamination suppression effect.

The resin composition is preferably liquid at 20°C.

In the present embodiment, "liquid at 20°C" means having a property capable of easily flowing and being deformed, and being solidified in the deformed shape by cooling.

The term is one in contrast with an elastomer having a property of being deformed instantaneously when an external force is applied to the elastomer and recovering to its original shape in a short time when the external force is removed. Owing to the resin composition having a property of being liquid at 20°C, when the resin composition is formed to a sheet shape or a cylindrical shape to obtain an original printing plate, a good thickness precision and size precision can be achieved.

The viscosity at 20°C of the resin composition is preferably 10 Pa·s or more and 10 kPa·s or less, and more preferably 50 Pa·s or more and 5 kPa·s or less.

With the viscosity at 20°C of 10 Pa·s or more, the mechanical strength of a printing plate fabricated is sufficient, and even when the resin composition is formed to a cylindrical shape, the shape can easily be retained and easily be processed.

With the viscosity at 20°C of 10 kPa·s or less, the resin composition can easily be deformed and easily be processed even if not exposed to a high temperature, can easily be formed to a sheet-shaped or cylindrical printing plate, and can simply be processed.

Especially in order to obtain a high-thickness precision printing plate, the viscosity at 20°C is preferably 100 Pa·s or more, more preferably 200 Pa·s or more, and still more preferably 500 Pa·s or more, so that the resin composition does not cause the phenomena such as liquid sagging due to the gravity.

In the present embodiment, the viscosity at 20°C can be measured by a method shown in Examples described later.

[Resin (a1)]

The resin (a1) used in the embodiment is a resin containing a siloxane bond, having a number-average molecular weight of 500 or more and 300,000 or less and having two or more -CO-NH- bonds.

[Siloxane bond]

The resin (a1) needs to contain a siloxane bond from the viewpoint of the ink repellency. The siloxane bond may be contained in either of the main chain or the side chain of the resin, and may be contained in both of the main chain and the side chain.

From the viewpoint of the ink repellency, the siloxane bond is preferably contained at least in the main chain.

In the present embodiment, "siloxane bond" means a molecular structure in which silicon (Si) and oxygen (O) are alternately bonded.

Although the detail of the mechanism with respect to the resin composition having excellent ink repellency has not been clarified, the present inventors assume that since, due to the siloxane bond stably bonded in the resin (a1), the resin composition has a lower affinity for an ink than a compound containing a siloxane bond which is added as an additive, such as a silicone oil, the ink repellency is improved.

The main chain and/or the side chain of the resin (a1) containing a siloxane bond preferably contains a silicone compound having an average composition represented by the following formula (1).

Formula (1): $R_pQ_rX_sSiO_{(4-p-r-s)/2}$

In the formula (1), Si denotes silicon; O denotes oxygen;
R denotes one or two or more groups selected from the group consisting of: alkyl groups having 1 to 30 carbon atoms as carbon atoms before substitution which are non-substituted or substituted with an alkyl group having 1 to 20 carbon atoms, an alkoxy group having 1 to 20 carbon atoms or an aryl group; cycloalkyl groups having 5 to 20 carbon atoms; aryl groups non-substituted or substituted with a halogen atom and having 6 to 20 carbon atoms; alkoxycarbonyl groups

having 2 to 30 carbon atoms; monovalent groups including a carboxyl group or salts thereof; monovalent groups including a sulfo group or salts thereof; and polyoxyalkylene groups,

Q and X each denote one or more groups selected from the group consisting of: a hydrogen atom; straight chain or branched chain alkyl groups having 1 to 30 carbon atoms; cycloalkyl groups having 5 to 20 carbon atoms; alkyl groups having 1 to 30 carbon atoms as carbon atoms before substitution which are non-substituted or substituted with an alkyl group having 1 to 20 carbon atoms, an alkoxy group having 1 to 20 carbon atoms or an aryl group; aryl groups non-substituted or substituted with a halogen atom and having 6 to 20 carbon atoms; alkoxycarbonyl groups having 2 to 30-carbon atoms; a carboxyl group or metal salt groups thereof; a sulfo group or metal salt groups thereof and polyoxyalkylene groups, and

p, r and s are numerical values satisfying:

$$0 < p < 4, 0 \leq r < 4, 0 \leq s < 4, \text{ and } (p + r + s) < 4.$$

In the present embodiment, the metal salt groups of a carboxyl group or metal salt groups thereof are $-CO_2M$ (M is a monovalent metal). The metal salt groups may be $-(CO_2)_2M$ (M is a divalent metal), made by two or more carboxyl groups together.

In the present embodiment, the metal salt groups of a sulfo group or metal salt groups thereof are $-SO_3M$ (M is a monovalent metal). The metal salt groups may be $-(SO_3)_2M$ (M is a divalent metal), made by two or more sulfo groups together.

In the present embodiment, the resin (a1) can be obtained from a compound containing a siloxane bond for introducing a siloxane bond thereto.

Examples of compounds containing a siloxane bond include silicone oils.

Examples of silicone oils include organopolysiloxanes having from a low viscosity to a high viscosity such as dimethyl polysiloxane, methyl phenyl polysiloxane, methyl hydrogen polysiloxane and dimethyl siloxane-methyl phenyl siloxane copolymers; cyclic siloxanes such as octamethylcyclotetrasiloxane, decamethylcyclopentasiloxane, dodecamethylcyclohexasiloxane, tetramethyl tetrahydrogen cyclotetrasiloxane and tetramethyl tetraphenyl cyclotetrasiloxane; silicone rubbers such as gummy dimethyl polysiloxane and gummy dimethyl siloxane-methyl phenyl siloxane copolymers having a high polymerization degree; and cyclic siloxane solutions of silicone rubber, trimethylsiloxysilicic acid, cyclic siloxane solutions of trimethylsiloxysilicic acid, higher alkoxy-modified silicones such as stearoxysilicones, and higher fatty acid-modified silicones.

Compounds containing a siloxane bond are preferably reactive silicone oils, and examples of reactive silicone oils include monoamine-modified silicone oils, diamine-modified silicone oils, special amino-modified silicone oils, epoxy-modified silicone oils, alicyclic epoxy-modified silicone oils, carbinol-modified silicone oils, mercapto-modified silicone oils, carboxyl-modified silicone oils, hydrogen-modified silicone oils, amino/polyether-modified silicone oils, epoxy/polyether-modified silicone oils, epoxy/aralkyl-modified silicone oils, reactive silicone oils, methacryl-modified silicone oils, polyether-modified silicone oils, phenol-modified silicone oils, silanol-modified silicone oils, fluorine-modified silicone oils, side-chain amino/both-terminals methoxy-modified silicone oils and diol-modified silicone oils.

Use of these reactive silicone oils facilitates the incorporation of a siloxane bond to the resin (a1).

In order to introduce a siloxane bond to a main chain part of a resin, both terminals-modified silicone oils are preferable among the reactive silicone oils.

Examples of the both terminals-modified silicone oils include both-terminals amino-modified silicone oils, both-terminals epoxy-modified silicone oils, both-terminals alicyclic epoxy-modified silicone oils, both-terminals carbinol-modified silicone oils, both-terminals methacryl-modified silicone oils, both-terminals polyether-modified silicone oils, both-terminals mercapto-modified silicone oils, both-terminals carboxy-modified silicone oils, both-terminals phenol-modified silicone oil and both-terminals silanol-modified silicone oils.

Particularly both-terminals carbinol-modified silicone oils are preferable from the viewpoints of the control of the reaction rate and the abundance of kinds thereof.

In order to introduce a siloxane bond to a side chain part of a resin, one terminal-modified silicone oils and side chain-modified silicone oils are preferable among the reactive silicone oils.

Examples of the one terminal-modified silicone oils and side chain-modified silicone oils include one-terminal diol-modified silicone oils, side-chain monoamine-modified silicone oils, side-chain diamine-modified silicone oils, side-chain epoxy-modified silicone oils, side-chain carbinol-modified silicone oils, side-chain carboxy-modified silicone oils, side-chain amino/polyether-modified silicone oils, side-chain epoxy polyether-modified silicone oils and side-chain epoxy/aralkyl-modified silicone oils.

Above all, side-chain carbinol-modified silicone oils and one terminal diol-modified silicone oils are preferable from the viewpoint of the reactivity and the handleability such as odor and irritation.

The number-average molecular weight of a compound containing a siloxane bond for introducing a siloxane bond to the main chain of the resin (a1) is preferably 500 or more and 10,000 or less, more preferably 600 or more and

9,000 or less, still more preferably 700 or more and 8,000 or less, and further still more preferably 800 or more and 7,000 or less.

With the number-average molecular weight in the above-mentioned range, the ink repellency due to the siloxane bond is fully exhibited; the fluidity as the silicone compound is secured; and the solubility between the resin (a1) and the resin (a2) is likely to be secured, thus the resin (a1) becomes easy to handle.

The number-average molecular weight of a compound containing a siloxane bond for introducing a siloxane bond to the side chain of the resin (a1) is preferably 1,000 or more and 30,000 or less, and more preferably 10,000 or more and 20,000 or less.

With the number-average molecular weight in the above-mentioned range, the decomposability by the siloxane bond of the side chain is fully exhibited; and the fluidity as the silicone compound is secured, thus the resin (a1) becomes easy to handle.

In the present embodiment, "number-average molecular weight" means a value obtained by the measurement using gel permeation chromatography and the calibration using molecular weight-known polystyrenes.

In the present embodiment, the number-average molecular weight can be measured by a method described in Examples described later.

The number-average molecular weight of the resin (a1) is 500 or more and 300,000 or less, preferably 1,300 or more and 300,000 or less, more preferably 1,500 or more and 270,000 or less, still more preferably 2,000 or more and 250,000 or less, and further still more preferably 3,000 or more and 200,000 or less.

With the number-average molecular weight of the resin (a1) of 500 or more, since the strength of an original printing plate and a printing plate is improved, the plates are likely to withstand repeating usage.

With the number-average molecular weight of the resin (a1) of 300,000 or less, since the viscosity of the resin composition during forming processing does not excessively rise, an original printing plate and a printing plate are likely to be easily fabricated.

Although the resin (a1) does not need to contain a polymerizable unsaturated group in its molecule in some cases, the resin (a1) preferably has a polymerizable unsaturated group in its molecule because there is the case where the resin (a1) is crosslinked with electron beam irradiation or the like without any initiator.

Preferred resin (a1) contains a polymerizable unsaturated group and has a number-average molecular weight of 500 or more and 300,000 or less, or 1,300 or more and 300,000 or less.

More preferred resin (a1) contains a polymerizable unsaturated group and has a number-average molecular weight of 1,500 or more and 270,000 or less, still more preferably 2,000 or more and 250,000 or less, and further still more preferably 3,000 or more and 200,000 or less.

Since mechanical strength and durability of the original printing plate and the printing plate tend to be improved, the resin (a1) preferably contains 0.3 group or more of a polymerizable unsaturated group on average per one molecule.

In consideration of the mechanical strength of the original printing plate and the printing plate, the number of the polymerizable unsaturated group in the resin (a1) is more preferably 0.5 group or more, and still more preferably 0.7 group or more, on average per one molecule.

The resin (a1) preferably has two or less groups of the polymerizable unsaturated group on average per one molecule from the viewpoint that the mechanical strength of the resin after curing is improved and a process to introduce the polymerizable unsaturated group is simple.

In the present embodiment, "polymerizable unsaturated group" means a polymerizable functional group participating in radical polymerization reaction or addition polymerization reaction.

The polymerizable unsaturated group is preferably directly bonded to the terminals or bodies of the main chain and the side chain of a resin such as the resin (a1) and the resin (a2).

In the present embodiment, the average number of the polymerizable unsaturated group contained in one molecule of a resin can be determined by the molecular structure analysis method by the nuclear magnetic resonance spectrum method (NMR method).

In the present embodiment, in order to have a reasonable elasticity as a printing plate, the resin (a1) further contains two or more -CO-NH- bonds.

The resin (a1) preferably has at least two repeating units containing a siloxane bond and a -CO-NH- bond.

Methods for manufacturing the resin (a1) are not especially limited, and a method usable is, for example, a method in which the compound containing a siloxane bond and a compound (for example, polyisocyanate or the like having a hydroxyl group or an amino group etc) having a plurality of functional groups bondable with the compound containing a siloxane bond are allowed to react, and the reaction product is allowed to react with a compound having a functional group, reactive with a terminal bonding group of the reaction product whose molecular weight has been adjusted and whose molecular terminal has been converted to the bonding group, and a polymerizable unsaturated group to introduce the polymerizable unsaturated group to the terminal.

The resin (a1) containing a polymerizable unsaturated group may be manufactured by allowing a compound containing a siloxane bond to react with a compound containing a plurality of functional groups bondable with the

compound containing a siloxane bond and thereafter allowing the obtained compound to react directly with a compound containing a polymerizable unsaturated group.

By subjecting hydroxyl groups or amino groups of the reactive terminals of a compound containing a siloxane bond to a condensation reaction with a diisocyanate compound or a triisocyanate compound as a polyisocyanate, -CO-NH- bonds can be introduced into the resin (a1) and the compound can be polymerized. Hydroxyl groups, carboxyl groups or isocyanate groups of terminals can be used for introducing polymerizable unsaturated groups.

Examples of diisocyanate compounds include compounds such as 2,4-tolylene diisocyanate, 2,6-tolylene diisocyanate, 4,4'-diphenylmethane diisocyanate, hexamethylene diisocyanate, isophorone diisocyanate, methylenebis(cyclohexane-4,1-diyl) diisocyanate, m-phenylenebis(1-methylethane-1,1-diyl) diisocyanate, m-xylylenediyl diisocyanate, naphthalene-1,5-diyl diisocyanate, 1,6'-diisocyanato-2,2,4-trimethylhexane, 3,3'-dimethylbiphenyl-4,4'-diisocyanate, 1,3-phenylene diisocyanate, 1,4-phenylene diisocyanate, cyclohexane-1,3-diyl diisocyanate, cyclohexane-1,4-diyl diisocyanate, dimer acid diisocyanates, cyclohexane-1,3-diylbis(methyl isocyanate), 2-methyl-1,4-phenylene diisocyanate, 4-[(2-isocyanatophenyl)oxy]phenyl isocyanate, 4,4'-oxybis(phenyl isocyanate), naphthalene-1,4-diisocyanate, naphthalene-2,6-diyl diisocyanate, naphthalene-2,7-diyl diisocyanate, 1-methylcyclohexane-2,4-diisocyanate, 2,2'-dimethoxybiphenyl-4,4'-diyl diisocyanate, methyl 2,6-diisocyanatohexanoate, 5-methyl-1,3-phenylene diisocyanate, methylenebis(2,1-phenylene) diisocyanate, 4-[(2-isocyanatophenyl)methyl]phenyl isocyanate, dimethyldiisocyanatosilane, 2,4,6-triisopropylbenzene-1,3-diyl diisocyanate, 2,2-dimethylpentane-1,5-diyl diisocyanate, 4-[(2-isocyanatophenyl)thio]phenyl isocyanate, undecamethylene diisocyanate, methylenebis(2-methyl-4,1-phenylene) diisocyanate, adipoyl diisocyanate, 4,4'-ethylenebis(1-isocyanatobenzene), 1-(trifluoromethyl)-2,2,2-trifluoroethylidenebis(4,1-phenylene) diisocyanate, tetramethylene diisocyanate, 1,4-phenylenebis(ethylene) diisocyanate, 1,4-phenylenebis(ethylene) diisocyanate, 1-methylethylene diisocyanate, methylene diisocyanate, sulfonylbis(3,1-phenylene) diisocyanate, ethylene diisocyanate, trimethylene diisocyanate, pentamethylene diisocyanate, heptane-1,7-diyl diisocyanate, nonamethylene diisocyanate and decamethylene diisocyanate.

Examples of triisocyanate compounds include compounds such as triphenylmethane triisocyanate, 1-methylbenzene-2,4,6-triisocyanate, naphthalene-1,3,7-triisocyanate and biphenyl-2,4,4'-triisocyanate.

In the present embodiment, the resin (a1) is preferably a resin for a laser-engraving original printing plate, which contains a siloxane bond and two or more -CO-NH- bonds, and has a number-average molecular weight of 500 or more and 300,000 or less.

The resin (a1) contains a siloxane bond, and the siloxane bond is preferably a bond originated from a compound containing a siloxane bond.

The compound containing a siloxane bond is incorporated in the resin (a1) as a repeating unit containing slioxane bonds.

The repeating unit containing siloxane bonds is a repeating unit originated from the compound containing a siloxane bond, and the number-average molecular weight of the repeating unit containing siloxane bonds, in the case where the siloxane bond is incorporated in the main chain of the resin (a1), is preferably 500 or more and 10,000 or less, more preferably 500 or more and 5,000 or less, and still more preferably 500 or more and 3,000 or less.

The number-average molecular weight of a compound containing a siloxane bond to be incorporated in the side chain of the resin (a1) is preferably 1,000 or more and 30,000 or less, and more preferably 10,000 or more and 20,000 or less.

The resin (a1) is preferably a resin which can be obtained by polymerizing a compound containing a siloxane bond and a diisocyanate compound, and preferably further contains a polymerizable unsaturated group.

In the present embodiment, the resin (a1) is suitable as a resin for a laser-engraving original printing plate, and has a number-average molecular weight, for a resin for a laser-engraving original printing plate, of 500 or more and 300,000 or less, preferably 1,300 or more and 300,000 or less, more preferably 1,500 or more and 270,000 or less, still more preferably 2,000 or more and 250,000 or less, and further still more preferably 3,000 or more and 200,000 or less.

The resin (a1) as a resin for a laser-engraving original printing plate contains a siloxane bond and contains two or more -CO-NH- bonds, and the -CO-NH- bonds are suitably bonds produced as a result of the reaction of a compound containing a siloxane bond with isocyanate groups of a diisocyanate compound.

In the present embodiment, the resin (a1) preferably contains a polymerizable unsaturated group, and more preferably contains a polymerizable unsaturated group at a molecular terminal thereof.

Compounds containing a polymerizable unsaturated group which introduce the polymerizable unsaturated group in the resin (a1) include compounds containing, as a polymerizable unsaturated group, a functional group such as a (meth)acrylate group or a vinyl group, and a functional group such as a hydroxyl group, an isocyanate group, an amino group or a carboxyl group in molecules thereof.

From the viewpoint of the reactivity, examples of preferred compounds include 2-(meth)acryloyloxyethyl isocyanate and 2-hydroxyethyl (meth)acrylate .

The resin (a1) may contain a liquid resin having a glass transition temperature of 20°C or lower, and may contain a liquid resin having a glass transition temperature of 0°C or lower. Examples of such liquid resins include

compounds having a hydrocarbon chain such as polyethylene, polybutadiene, hydrogenated polybutadiene and polyisoprene, polyester compounds having ester bonds such as adipate and polycaprolactone, compounds having a polycarbonate structure, and compounds having a polydimethylsiloxane skeleton.

Particularly, unsaturated polyurethanes having a polycarbonate structure may be contained from the viewpoint of weather resistance.

In the present embodiment, "liquid resin" means a resin having a property of easily flowing and being deformed, and being capable of being solidified in a deformed shape by cooling, and is a term in contrast with an elastomer having a property of being instantaneously deformed according to an external force when the external force is applied, and recovering to its original shape in a short time when the external force is removed.

The viscosity at 20°C of the resin (a1) is preferably 10 Pa·s or more and 10 kPa·s or less, more preferably 30 Pa·s or more and 7 kPa·s or less, and still more preferably 50 Pa·s or more and 5 kPa·s or less.

With the viscosity at 20°C of 10 Pa·s or more, the mechanical strength of an original printing plate which is composed of the resin (a1) is likely to become good.

With the viscosity at 20°C of 10 kPa·s or less, the resin (a1) is easily deformed, and is likely to become easily mixed with other components and easily shaped.

[Resin (a2)]

The resin (a2) used in the present embodiment is a resin which contains no siloxane bond, and has a number-average molecular weight of 1,000 or more and 300,000 or less.

In the present embodiment, "having no siloxane bond" means that the main skeleton is not a siloxane bond.

With the number-average molecular weight of the resin (a2) of 1,000 or more, since the strength of an original printing plate and a printing plate is improved, these are likely to withstand the repeating usage.

With the number-average molecular weight of the resin (a2) of 300,000 or less, since the viscosity of the resin composition during forming processing does not rise excessively, an original printing plate and a printing plate are likely to be easily fabricated.

The number-average molecular weight of the resin (a2) is preferably 2,000 or more and 250,000 or less, and more preferably 3,000 or more and 200,000 or less.

Although the resin (a2) does not need to have a polymerizable unsaturated group in its molecule in some cases, similarly to the resin (a1), since crosslinking polymerization can be induced by electron beam irradiation or the like even though an initiator is not contained, the resin (a2) preferably has a polymerizable unsaturated group in its molecule.

The resin (a2) preferably has 0.3 or more group of a polymerizable unsaturated group on average per one molecule because the mechanical strength of an original printing plate and a printing plate is improved and the durability thereof is likely to become good.

In consideration of the mechanical strength of an original printing plate and a printing plate, the number of the polymerizable unsaturated group in the resin (a2) is more preferably 0.5 or more group thereof, and still more preferably 0.7 or more group on average per one molecule.

The resin (a2) preferably has two or less groups of the polymerizable unsaturated group per one molecule since the mechanical properties of the resin after curing are improved and a process for imparting the polymerizable unsaturated group is simple.

The resin (a2) preferably comprises a repeating unit containing at least one bond selected from the group consisting of a carbonate bond, a urethane bond and an ester bond in a molecule thereof.

In the case where the resin (a2) contains the above-mentioned bond, the durability of an original printing plate and a printing plate is likely to be improved against an ink cleaning agent containing an esteric solvent and an ink cleaning agent containing a hydrocarbon solvent used in printing.

In the present embodiment, the repeating unit containing at least one bond selected from the group consisting of a carbonate bond, a urethane bond and an ester bond in the molecule of the resin (a2) is originated from a compound having at least one bond selected from the group consisting of a carbonate bond, a urethane bond and an ester bond.

Methods for manufacturing the resin (a2) are not especially limited, and examples thereof include a method in which a compound, as a compound having at least one bond selected from the group consisting of a carbonate bond, a urethane bond and an ester bond, having at least one bond selected from the group consisting of a carbonate bond, a urethane bond and an ester bond, and having a plurality of reactive groups such as a hydroxyl group, an amino group, an epoxy group, a carboxyl group, an acid anhydride group, a ketone group, a hydrazine residue, an isocyanate group, an isothiocyanate group, a cyclic carbonate group and an alkoxycarbonyl group, and having a number-average molecular weight of several thousands, and a compound having a plurality of functional groups bondable with the above-mentioned reactive groups (for example, polyisocyanate or the like having a hydroxyl group or an amino group) are allowed to react to adjust the molecular weight and convert the molecular terminals to bondable groups.

Examples of methods for introducing a polymerizable unsaturated group to a terminal include a method in

which a compound having a functional group reactive with the above-mentioned bondable group of the molecular terminal and a polymerizable unsaturated group, and the compound manufactured as described above are allowed to react to introduce the polymerizable unsaturated group to the terminal.

The resin (a2) having a polymerizable unsaturated group may be manufactured by allowing a compound having a plurality of reactive group and a number-average molecular weight of several thousands to react with a compound having a plurality of functional groups bondable with the former compound, and thereafter, allowing to react directly with a compound having a polymerizable unsaturated group.

Examples of compounds having a carbonate bond used for manufacture of the resin (a2) include aliphatic polycarbonate diols such as 4,6-polyalkylene carbonate diols, 8,9-polyalkylene carbonate diols and 5,6-polyalkylene carbonate diols.

Examples of aliphatic polycarbonate diols include compounds such as poly(polymethylene (C = 2, 4, 5, 6) carbonates, poly(1,9-nonanediol; 2-methyl-1,8-octanediol) carbonates, 1,3-dioxan-2-one polymers with 1,6-hexane diol, carbonic acid dimethy ester, and polymers with 1,6-hexanediol and 2-oxepanone.

Commercially available compounds as the aliphatic polycarbonate diols are PCDL® "T4672", "T5651", 'T6002", "T5652", "T5650J" and "T4671", made by Asahi Kasei Chemicals Corp., Kuraray Polyol® "C-2015N", made by Kuraray Co., Ltd., Plakcel CD® "CD205", "CD205PL", "CD205HL", "CD210", "CD210PL", "CD220" and "CD220PL", made by Daicel Chemical Industries, Ltd., ETERNACOLL® "UH", "UHC", "UC" and "UM", made by Ube Industries, Ltd., and the like.

Aromatic polycarbonate diols having an aromatic molecular structure in their molecules may be used.

The aromatic polycarbonate diols can be obtained, for example, by allowing a divalent aromatic phenol to react with a carbonate bond-producible compound such as phosgene or diphenylcarbonate.

Examples of the divalent aromatic phenols include aromatic diols such as hydroquinone, 4,4'-dihydroxybiphenyl, 4,4'-dihydroxy-3,3'-diphenylbiphenyl, 4,4'''-dihydroxyquaterphenyl, 1,5-dihydroxynaphthalene, 2,7-dihydroxynaphthalene and 9,9-bis(4-hydroxyphenyl)fluorene, bis(hydroxyaryl)alkanes such as 2,2-bis(4-hydroxyphenyl)propane, 2,2-bis(4-hydroxy-3-methylphenyl)propane, 2,2-bis(4-hydroxy-3,5-dimethylphenyl)propane, 2,2-bis(4-hydroxy-t-butylphenyl)propane and 2,2-bis(4-hydroxybromophenyl)propane, bis(hydroxyaryl)cycloalkanes such as 1,1-bis(4-hydroxyphenyl)cyclopentane and 1,1-bis(4-hydroxyphenyl)cyclohexane, dihydroxyaryl ethers such as 4,4'-dihydroxydiphenyl ether and 4,4'-dihydroxy-3,3'-dimethylphenyl ether, dihydroxyaryl sulfides such as 4,4'-dihydroxydiphenyl sulfide and 4,4'-dihydroxy-3,3'-dimethylphenyl sulfide, dihydroxyaryl sulfoxides such as 4,4'-dihydroxydiphenyl sulfoxide and 4,4'-dihydroxy-3,3'-dimethylphenyl sulfoxide, and dihydroxyaryl sulfones such as 4,4'-dihydroxydiphenyl sulfone and 4,4'-dihydroxy-3,3'-dimethylphenyl sulfone.

Examples of compounds having a urethane bond used for manufacture of the resin (a2) include a compound having a polycarbonate polyurethane obtained by allowing an aliphatic polycarbonate diol to react with a diisocyanate compound in its molecular skeleton.

Examples of the compounds having a urethane bond include also reaction products of compounds having two or more hydroxyl groups in a molecule thereof, such as ethylene glycol, diethylene glycol, polyethylene glycol, propylene glycol, polypropylene glycol, trimethylene glycol, 1,4-butanediol, 1,5-pentanediol, 1,6-hexanediol, 1,7-heptane diol, 1,8-octanediol, 1,9-nonanediol, 1,10-decanediol, pinacol, cyclopentanediol and cyclohexanediol, and isocyanate compounds described below.

Examples of the compounds having an ester bond used for manufacture of the resin (a2) include polyesters obtained by allowing a dicarboxylic acid compound, such as adipic acid, phthalic acid, malonic acid, succinic acid, itaconic acid, oxalic acid, glutaric acid, pimelic acid, suberic acid, azelaic acid, sebacic acid, fumaric acid, isophthalic acid and terephthalic acid, to condensation react with a compound having two or more hydroxyl groups in its molecule, such as ethylene glycol, diethylene glycol, polyethylene glycol, propylene glycol, polypropylene glycol, trimethylene glycol, 1,4-butanediol, 1,5-pentanediol, 1,6-hexandiol, 1,7-heptane diol, 1,8-octanediol, 1,9-nonanediol, 1,10-decanediol, pinacol, cyclopentanediol and cyclohexanediol; and polyesters such as polycaprolactones.

By subjecting hydroxyl groups or carboxyl groups on terminals of these compounds to condensation reaction with an isocyanate compound, a urethane bond can be introduced and a polymeric substance can be made. Additionally, a hydroxyl group, a carboxyl group or an isocyanate group on the terminal may be used for introducing a polymerizable unsaturated group.

Examples of the diisocyanate compounds include compounds such as 2,4-tolylene diisocyanate, 2,6-tolylene diisocyanate, 4,4'-diphenylmethane diisocyanate, hexamethylene diisocyanate, isophorone diisocyanate, methylenebis(cyclohexane-4,1-diyl) diisocyanate, m-phenylenebis(1-methylethane-1,1-diyl) diisocyanate, m-xylylenediyl diisocyanate, naphthalene-1,5-diyl diisocyanate, 1,6-diisocyanato-2,2,4-trimethylhexane, 3,3'-dimethylbiphenyl-4,4'-diisocyanate, 1,3-phenylene diisocyanate, 1,4-phenylene diisocyanate, cyclohexane-1,3-diyl diisocyanate, cyclohexane-1,4-diyl diisocyanate, dimer acid diisocyanate, cyclohexane-1,3-diyl bis(methyl isocyanate), 2-methyl-1,4-phenylene diisocyanate, 4-[(2-isocyanatophenyl)oxy]phenyl isocyanate, 4,4'-oxybis(phenyl isocyanate), naphthalene-1,4-diisocyanate, naphthalene-2,6-diyl diisocyanate, naphthalene-2,7-diyl diisocyanate, 1-methylcyclohexane-2,4-diisocyanate,

2,2'-dimethoxybiphenyl-4,4'-diyl diisocyanate, methyl 2,6-diisocyanatohexanoate, 5-methyl-1,3-phenylene diisocyanate, methylenebis(2,1-phenylene) diisocyanate, 4-[(2-isocyanatophenyl)methyl]phenyl isocyanate, dimethyldiisocyanatosilane, 2,4,6-triisopropylbenzene-1,3-diyl diisocyanate, 2,2-dimethylpentane-1,5-diyl diisocyanate, 4-[(2-isocyanatophenyl)thio]phenyl isocyanate, undecamethylene diisocyanate, methylenebis(2-methyl-4,1-phenylene) diisocyanate, adipoyl diisocyanate, 4,4'-ethylenebis(1-isocyanatobenzene), 1-(trifluoromethyl)-2,2,2-trifluoroethylidenebis(4,1-phenylene) diisocyanate, tetramethylene diisocyanate, 1,4-phenylenebis(ethylene) diisocyanate, 1,4-phenylenebis(ethylene) diisocyanate, 1-methylethylene diisocyanate, methylene diisocyanate, sulfonylbis(3,1-phenylene) diisocyanate, ethylene diisocyanate, trimethylene diisocyanate, pentamethylene diisocyanate, heptane-1,7-diyl diisocyanate, nonamethylene diisocyanate and decamethylene diisocyanate.

The triisocyanate compounds include compounds such as triphenylmethane triisocyanate, 1-methylbenzene-2,4,6-triisocyanate, naphthalene-1,3,7-triisocyanate and biphenyl-2,4,4'-triisocyanate.

In the present embodiment, the resin (a2) preferably comprises a repeating unit containing at least one bond selected from the group consisting of a carbonate bond, a urethane bond and an ester bond, and is preferably a resin for a laser-engraving original printing plate, which resin further contains two or more -CO-NH- bonds and has a number-average molecular weight of 1,000 or more and 300,000 or less.

Although the resin (a2) comprises a repeating unit containing at least one bond selected from the group consisting of a carbonate bond, a urethane bond and an ester bond, the unit is preferably bonds originated from a compound having at least one bond selected from the group consisting of a carbonate bond, a urethane bond and an ester bond.

The resin (a2) is preferably a resin which can be obtained by polymerizing a compound having at least one bond selected from the group consisting of a carbonate bond, a urethane bond and an ester bond with a diisocyanate compound, and more preferably has a polymerizable unsaturated group.

In the present embodiment, the resin (a2) is suitable as a resin for a laser-engraving original printing plate, and the resin for a laser-engraving original printing plate has a number-average molecular weight of 1,000 or more and 300,000 or less, preferably 2,000 or more and 250,000 or less, and more preferably 3,000 or more and 200,000 or less.

The resin (a2) as a resin for a laser-engraving original printing plate contains no siloxane bond, and preferably contains a -CO-NH- bond, and the -CO-NH- bond is suitably a bond produced as a result of the reaction of a compound having at least one bond selected from the group consisting of a carbonate bond, a urethane bond and an ester bond with an isocyanate group of a compound such as a diisocyanate compound.

The resin (a2) preferably has two or more repeating units containing at least one bond selected from the group consisting of a carbonate bond, a urethane bond and an ester bond, and a -CO-NH- bond.

In the present embodiment, the resin (a2) preferably has a polymerizable unsaturated group, and more preferably has a polymerizable unsaturated group at the molecular terminal.

Compounds having a polymerizable unsaturated group for introducing the polymerizable unsaturated group in the resin (a2) include compounds having a functional group such as a (meth)acrylate group or a vinyl group as a polymerizable unsaturated group and a functional group such as a hydroxyl group, an isocyanate group, an amino group or a carboxyl group in a molecule thereof.

The preferable compounds include compounds such as 2-(meth)acryloyloxyethyl isocyanate and 2-hydroxyethyl (meth)acrylate from the viewpoint of the reactivity.

The resin (a2) may comprise a liquid resin having a glass transition temperature of 20°C or lower, or a liquid resin having a glass transition temperature of 0°C or lower. Examples of such liquid resins include compounds having a hydrocarbon chain such as polyethylene, polybutadiene, hydrogenated polybutadiene and polyisoprene, polyester compounds having ester bonds such as adipate and polycaprolactone, and compounds having a polycarbonate structure.

Particularly, the liquid resin may contain unsaturated polyurethanes having a polycarbonate structure from the view point of the weather resistance.

In the present embodiment, "liquid resin" means a resin having a property capable of easily flowing and being deformed, and being solidified in the deformed shape by cooling, and a term in contrast with an elastomer having a property of being deformed instantaneously according to an external force when the external force is applied to the elastomer and recovering to its original shape in a short time when the external force is removed.

The viscosity at 20°C of the resin (a2) is preferably 10 Pa·s or more and 10 kPa·s or less, more preferably 30 Pa·s or more and 7 kPa·s or less, and still more preferably 50 Pa·s or more and 5 kPa·s or less.

With the viscosity at 20°C of 10 Pa·s or more, the mechanical strength when the resin (a2) is made an original printing plate is likely to become good.

With the viscosity at 20°C of 10 kPa·s or less, the resin (a2) is easily deformed at ordinary temperature, and is likely to become easily mixed with other components and easily shaped.

The content of the resin (a1) in a resin composition is preferably 1 part by mass or more and 100 parts by mass or less, more preferably 2 part by mass or more and 50 parts by mass or less, and still more preferably 3 parts by mass or more, with respect to 100 parts by mass of the resin (a2).

With the content of the resin (a1) in a resin composition in the above-mentioned range, an effect on the contamination with an ink is developed and the viscosity is likely to be in the range of being easily handled.

The resin (a1) and the resin (a2) each may be used in one kind or in two or more kinds.

The resin composition, not especially limited, but may comprise, in addition to the resin (a1) and the resin (a2), an organic compound (b), a photopolymerization initiator (c), a thermopolymerization initiator (d), an inorganic microparticle, and additives according to applications and purposes.

[Organic compound (b)]

The resin composition according to the present embodiment may further comprise an organic compound (b), and the organic compound (b) has a number-average molecular weight of less than 1,000, and has a polymerizable unsaturated group.

The organic compound (b) has a number-average molecular weight of less than 1,000 from the viewpoint of ease of dilution in the resin (a1) and the resin (a2), and preferably has that of 100 or more from the viewpoint of handleability such as low volatility.

The content of the organic compound (b) in the resin composition is not especially limited, but is preferably 10 parts by mass or more and 300 parts by mass or less, and more preferably 20 parts by mass or more and 250 parts by mass or less, with respect to 100 parts by mass of the resin (a2).

With the content of the organic compound (b) of 10 parts by mass or more, an original printing plate and a printing plate as cured products of the resin composition are likely to provide a sufficient mechanical strength.

With the content of the organic compound (b) of 300 parts by mass or less, an original printing plate and a printing plate as cured products of the resin composition are likely to be decreased in curing shrinkage.

Examples of the organic compounds include, as radical reactive compounds, olefins such as ethylene, propylene, styrene and divinylbenzene, acetylenes, (meth)acrylic acid and derivatives thereof, haloolefins, unsaturated nitriles such as acrylonitrile, (meth)acrylamide and derivatives thereof, aryl compounds such as aryl alcohols and aryl isocyanates, unsaturated dicarboxylic acids such as maleic anhydride, maleic acid and fumaric acid and derivatives thereof, vinyl acetates, N-vinylpyrrolidone, and N-vinylcarbazole.

The organic compound (b) is preferably (meth)acrylic acid and derivatives thereof from the viewpoint of the abundance of their kinds, the price, the decomposability at laser light irradiation, and the like.

Examples of derivatives of (meth)acrylic acid include alicyclic compounds having a cycloalkyl group, a bicycloalkyl group, a cycloalkene group, a bicycloalkene group or the like, aromatic compounds having a benzyl group, a phenyl group, a phenoxy group, a fluorene group or the like, compounds having an alkyl group, a halogenated alkyl group, an alkoxyalkyl group, a hydroxyalkyl group, an aminoalkyl group, a glycidyl group or the like, and ester compounds with polyhydric alcohols such as alkylene glycols, polyoxyalkylene glycols, polyalkylene glycols and trimethylolpropane.

Examples of the organic compound (b) include, as compounds having an epoxy group, which addition-polymerizes, compounds obtained by allowing a polyol such as various types of diols or triols to react with epichlorohydrin, and epoxy compounds obtained by allowing an ethylene bond in a molecule of a compound to react with a peracid.

Examples of the epoxy compound include epoxy compounds such as ethylene glycol diglycidyl ether, diethylene glycol diglycidyl ether, triethylene glycol diglycidyl ether, tetraethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerol diglycidyl ether, glycerol triglycidyl ether, trimethylolpropane triglycidyl ether, bisphenol A diglycidyl ether, hydrogenated bisphenol A diglycidyl ether, diglycidyl ethers of compounds obtained by adding ethylene oxide or propylene oxide to bisphenol A, polytetramethylene glycol diglycidyl ethers, poly(propylene glycol adipate)diol diglycidyl ethers, poly(ethylene glycol adipate)diol diglycidyl ethers and poly(caprolactone)diol diglycidyl ethers.

As the organic compound (b) having a polymerizable unsaturated group, one or more kinds thereof can be selected according to the purpose. For example, in the case of use as a printing plate, as an organic compound (b) used for suppressing swelling due to an organic solvent such as an alcohol or an ester as a solvent of a printing ink, an organic compound (b) is preferable which has at least one of long chain aliphatic, alicyclic or aromatic derivatives.

In order to enhance the mechanical strength of an original printing plate obtained from the resin composition, the organic compound (b) preferably contains an alicyclic derivative and/or an aromatic derivative. In this case, the content of the alicyclic derivative and/or the aromatic derivative is preferably 20% by mass or more, and more preferably 50% by mass or more, with respect to the total amount of the organic compound (b).

The aromatic derivative as the organic compound (b) may be an aromatic compound having elements such as nitrogen and sulfur.

In order to enhance the impact resilience of a printing plate, for example, an acrylic monomer as described in Japanese Patent Laid-Open No. 7-239548 may be used, and another substance can be selected utilizing the technical knowhow of well-known photosensitive resins for printing.

It is preferable in order to improve the solvent resistance of a printing plate that the resin (a2) and/or the organic

compound (b) is a compound having at least one bond selected from the group consisting of a carbonate bond, a urethane bond and an ester bond in a molecule thereof, and/or a compound having an aliphatic saturated hydrocarbon chain and a urethane bond, and/or a compound having an aliphatic unsaturated hydrocarbon chain and a urethane bond. Above all, the compound having a carbonate bond, the compound having an aliphatic saturated hydrocarbon chain and a urethane bond, and the compound having an aliphatic unsaturated hydrocarbon chain and a urethane bond exhibit an especially high solvent resistance to an esteric solvent often used in a solvent ink.

[Photopolymerization initiator (c)]

The resin composition according to the embodiment further comprises a photopolymerization initiator (c).
The photopolymerization initiator (c) can be selected from ones commonly used, and examples thereof includes photopolymerization initiators for radical polymerization, cationic polymerization and anionic polymerization, exemplified in The Society of Polymer Science, Japan (eds.), "Polymer Data Handbook-Fundamental Edition", 1986, published by Baifukan Co., Ltd.
A photopolymerization initiator (c) to induce a radical polymerization reaction is preferably at least one selected from the group consisting of hydrogen-abstraction-type photopolymerization initiators and disintegration-type photopolymerization initiators.
The photopolymerization initiators may be used singly or in two or more thereof, which may be both of a hydrogen-abstraction-type photopolymerization initiator and a disintegration-type photopolymerization initiator.
The hydrogen-abstraction-type photopolymerization initiator is not especially limited as long as it is a compound to abstract hydrogen from a surrounding medium after being in an excited triplet state and to generate a radical, and includes an aromatic ketone from the viewpoint of the effective photocuring and the stability of the photopolymerization initiator in visible light.
Examples of the aromatic ketones include benzophenones, Michler's ketone, xanthenes, thioxanthones and anthraquinones, and at least one selected from these is preferably used.
Examples of benzophenones include benzophenone and benzophenone derivatives such as 3,3', 4,4'-benzophenonetetracarboxylic anhydride and 3,3', 4,4'-tetramethoxybenzophenone.
Examples of Michler'ketones include Michter'ketone and derivatives thereof.
Examples of xanthenes include xanthene, and derivatives substituted with an alkyl group, a phenyl group or a halogen group.
Examples of thioxanthones include thioxanthones and thioxanthone derivatives substituted with an alkyl group, a phenyl group or a halogen group such as ethylthioxanthone, methylthioxanthone and chlorothioxanthone.
Examples of anthraquinones include anthraquinone, and anthraquinone derivatives substituted with an alkyl group, a phenyl group or a halogen group.
The content of the hydrogen-abstraction-type photopolymerization initiator in the resin composition is not especially limited, but is preferably 0.1 part by mass or more and 10 parts by mass or less, and more preferably 0.5 part by mass or more and 5 parts by mass or less, with respect to 100 parts by mass of the resin (a2).
With the content of the hydrogen-abstraction-type photopolymerization initiator in the above-mentioned range, in the case of photocuring the resin composition, the curability of the surface of a cured product can sufficiently be secured, and a good weather resistance is likely to be provided. It is suitable for cutting, grinding and polishing the cured product surface to secure the curability of the surface of a cured product.
The disintegration-type photopolymerization initiator is not especially limited as long as it is a compound generating the cleavage reaction in its molecule after light absorption and generating an active radical.
Examples of the disintegration-type photopolymerization initiator include benzoin alkyl ethers, 2,2-dialkoxy-2-phenylacetophenones, acetophenones, acyl oxime esters, azo compounds, organic sulfur compounds and diketones.
At least one compound selected from a group of these is preferably used.
Examples of benzoin alkyl ethers include benzoin isopropyl ether, benzoin isobutyl ether, and compounds described in "Photosensitive Polymer" (published by Kodansha Ltd., 1977, p. 228)(in Japanese).
Examples of 2,2-dialkoxy-2-phenylacetophenones include 2,2-dimethoxy-2-phenylacetophenone and 2,2-diethoxy-2-phenylacetophenone.
Examples of acetophenones include acetophenone, trichloroacetophenone, 1-hydroxycyclohexylphenylacetophenone and 2,2-diethoxyacetophenone.
Examples of acyl oxime esters include 1-phenyl-1,2-propanedione-2-(o-benzoyl) oxime.
Examples of azo compounds include azobisisobutyronitrile, diazonium compounds and tetrazene compounds.
Examples of organic sulfur compounds include aromatic thiols, mono- and disulfides, thiuram sulfides, dithiocarbamates, S-acyl dithiocarbamate, thiosulfonates, sulfoxides, sulfenates and dithiocarbonates.
Examples of diketones include benzil and methylbenzoyl formate.
The content of the disintegration-type photopolymerization initiator in the resin composition is preferably 0.1

part by mass or more and 10 parts by mass or less, and more preferably 0.3 part by mass or more and 3 parts by mass or less, with respect to 100 parts by mass of the resin (a2).

With the content of the disintegration-type photopolymerization initiator in the above-mentioned range, even in the case where the resin composition is photocured in the air, the curability of the interior of a cured product can sufficiently be secured.

As the photopolymerization initiator (c), compounds may be used which have a site to function as a hydrogen-abstraction-type photopolymerization initiator and a site to function as a disintegration-type photopolymerization initiator in the same molecule.

Examples of such compounds include α-aminoacetophenones, including 2-methyl-1-(4-methylthiophenyl)-2-morpholino-propan-1-one and compounds represented by the following formula (2):

[Formula 1]

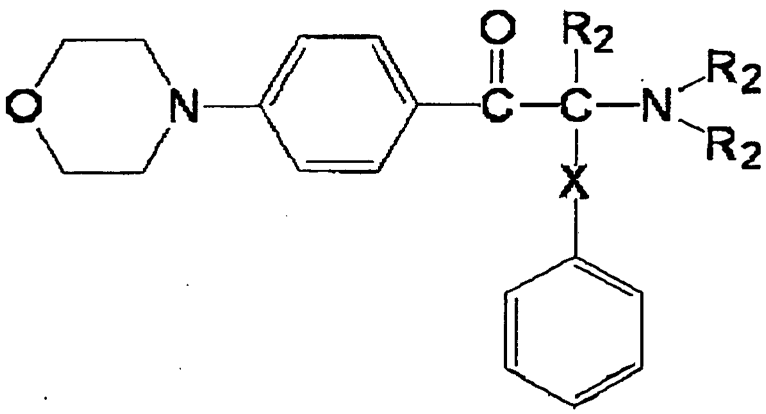

In the resin composition, the content of a compound having a site to function as a hydrogen-abstraction-type photopolymerization initiator and a site to function as a disintegration-type photopolymerization initiator in the same molecule is preferably 0.1 part by mass or more and 10 parts by mass or less, and more preferably 0.3 part by mass or more and 3 parts by mass or less, with respect to 100 parts by mass of the resin (a2).

With the content of the compound in the above-mentioned range, even in the case where the resin composition is photocured in the air, the mechanical property of a cured product can sufficiently be secured.

As the photopolymerization initiator (c), compounds may be used which induce the addition polymerization reaction by generating an acid or a base by absorbing light. Examples of such compounds include cationic photopolymerization initiators such as aromatic diazonium salts, aromatic iodonium salts and aromatic sulfonium salts.

In the resin composition, the content of the compound is preferably 0.1 part by mass or more and 10 parts by mass or less with respect to 100 parts by mass of the resin (a2).

[Thermopolymerization initiator (d)]

The resin composition according to the present embodiment may further comprise a thermopolymerization initiator (d).

The thermopolymerization initiator (d) includes all thermopolymerization initiators usable for the radical polymerization reaction and the ring-opening polymerization reaction.

Examples of the thermopolymerization initiator (d) used for the radical polymerization reaction include organic peroxides, inorganic peroxides, organosilicon peroxides, hydroperoxides, azo compounds, thiol compounds, quinones and quinone dioxime derivatives.

Organic peroxides are preferable from the viewpoint of securing of thermal curability in the air, handling, making a thermal cure product of a low hardness, and a solubility with a thermal curing resin composition.

The thermopolymerization initiators may be used singly or in two or more thereof.

Examples of organic peroxides include peroxy esters, diperoxy ketals, dialkyl peroxides, diacyl peroxides and t-alkyl hydroperoxides.

Examples of peroxy esters include t-butyl peroxyoctanoate, t-amyl peroxyoctanoate, t-butyl peroxyisobutyrate, t-butyl peroxymaleate, t-amyl perbenzoate, di-t-butyl diperoxyphthalate, t-butyl perbenzoate, t-butyl peracetate and 2,5-di(benzoylperoxy)-2,5-dimethylhexane.

Examples of diperoxy ketals include 1,1-di(t-amylperoxy)cyclohexane, 1,1-di(t-butylperoxy)cyclohexane, 2,2-di(t-butylperoxy)butane and ethyl 3,3-di(t-butylperoxy)butyrate.

Examples of dialkyl peroxides include di-t-butylperoxide, t-butylcumyl peroxide, dicumyl peroxide and 2,5-di(t-butylperoxy)-2,5-dimethylhexane.

Examples of diacyl peroxides include dibenzoyl peroxide, and diacetyl peroxide.

Examples of t-alkyl hydroperoxides include t-butyl hydroperoxide, t-amyl hydroperoxide, pinane hydroperoxide and cumyl hydroperoxide.

Examples of inorganic peroxides include peroxides of Ba, Ca, Mg, Zn and the like.

Examples of organosilicon peroxides include Si-O-O-Si type, Si-O-O-C type, and Si-O-O-R (alkyl) type compounds.

Examples of hydroperoxides include aliphatic and alicyclic saturated hydroperoxides such as methyl hydroperoxide, ethyl hydroperoxide, propyl hydroperoxide, butyl hydroperoxide, isopropyl hydroperoxide, isobutyl hydroperoxide, hexyl hydroperoxide, octyl hydroperoxide, decyl hydroperoxide, cyclopentyl hydroperoxide, cyclohexyl hydroperoxide, benzyl hydroperoxide, 1-phenylethyl hydroperoxide, diphenylmethyl hydroperoxide, triphenylmethyl hydroperoxide, tetralin hydroperoxide and 9-fluorenyl hydroperoxide, and hydroperoxides having an OOH group in an aromatic side chain.

In the present embodiment, when a cushion layer containing air bubbles is formed, the thermopolymerization initiator preferably includes azo compounds.

Examples of azo compounds include 1-(t-butylazo)formamide, 2-(t-butylazo)isobutyronitrile, 1-(t-butylazo)cyclohexanecarbonitrile, 2-(t-butylazo)-2-methylbutanenitrile, 2,2'-azobis(2-acetoxypropane), 1,1'-azobis(cyclohexanecarbonitrile), 2,2'-azobis(isobutyronitrile) and 2,2'-azobis(2-methylbutanenitrile).

Examples of thiol compounds include compounds such as 6-dibutylamino-1,3,5-triazine-2,4-dithiol, mercaptobenzothiazole and 2-mercaptoimidazoline.

Examples of quinones and quinone dioxime derivatives include compounds such as p-quinone and p-quinone dioxime.

Examples of the thermopolymerization initiator (d) used for the ring-opening polymerization reaction include latent thermopolymerization initiators of a type in which a polymerization initiator containing an acid or a base is put in a microcapsule, and the microcapsule breaks by heating for the interior polymerization initiator to flow out to initiate the curing.

As the latent thermopolymerization initiator, for example, Novacure®, made by Asahi Kasei Chemicals Corp. is preferably used.

The thermopolymerization initiator (d) is preferably liquid at 20°C from the viewpoint of ease of mixing it with the resin (a1), the resin (a2) and the organic compound (b).

The content of the thermopolymerization initiator (d) in the resin composition is preferably 0.1 part by mass or more and 10 parts by mass or less, and more preferably 0.5 part by mass or more and 5 parts by mass or less, with respect to 100 parts by mass of the resin (a2).

With the content of the thermopolymerization initiator in the above-mentioned range, a thermal curing resin composition for a laser-engraving original printing plate can fully be cured, and the tackiness of the surface of a thermal cure product can be reduced.

The thermal stability of the thermopolymerization initiator (d) is usually indicated by a method using a temperature of the 10-hour half-value period, 10h-$t_{1/2}$, that is, as a temperature at which 50% of an initial amount of the thermopolymerization initiator (d) decomposes to form free radicals after 10 hours. The details about this are shown in "Encyclopedia of Polymer Science and Engineering", vol. 11, p. 1 et seq., John Wiley & Sons, New York, 1988.

10h-$t_{½}$ of the thermopolymerization initiator (d) is preferably at least 60°C, more preferably at least 70°C, and still more preferably 80°C to 150°C.

In the present embodiment, the 10-hour half-value period of the thermopolymerization initiator (d) can be measured by the following method.

A solution in a certain concentration of a thermopolymerization initiator (organic peroxide) to be measured is prepared; and the solution is sealed in a nitrogen-replaced glass tube. The glass tube is immersed in a thermostatic chamber at a predetermined temperature T to thermally decompose the thermopolymerization initiator. When the concentration of the decomposed thermopolymerization initiator is denoted as x [mol/L]; the decomposition rate coefficient, as K [s-1]; the time, as t [s]; and the initial concentration of the thermopolymerization initiator, as a [mol/L], the following expressions are satisfied.

$$dx/dt = K(a - x)$$

$$Ln\{a/(a - x)\} = K \cdot t$$

Therefore, by plotting the relation between Ln{a/(a - x)} and t, the decomposition rate coefficient K at a temperature T can be determined.

The 10-hour half-value period temperature is a temperature at which the concentration of a thermopolymerization initiator decreases to half the initial concentration in 10 hours; therefore, it is the temperature when $K = 6.93 \times 10^{-2}$, which is obtained by substituting x = a/2 and $t = 3.6 \times 10^4$ into the expression; that is, the temperature when $K = 6.93 \times 10^{-2}$, derived from the plot between the temperature T and the decomposition rate coefficient K, is the 10-hour half-value period temperature.

[Inorganic microparticle]

The resin composition according to the present embodiment may further comprise inorganic microparticles.

The inorganic microparticles preferably have a number-average particle diameter of 10 nm or more and 10 μm or less.

With the number-average particle diameter of the inorganic microparticles in the above-mentioned range, when the printing surface of a laser-engraving original printing plate is adjusted by at least one method selected from the group consisting of cutting, grinding and polishing, the tackiness can be reduced and the surface roughness of an original printing plate is little affected, allowing pattern formation by laser engraving without generating faults in printing images.

In the present embodiment, "number-average particle diameter" means an average value of major axes measured by microscopic observation.

In the present embodiment, the number-average particle diameter of inorganic microparticles can be determined by adjusting the magnification so that at least approximately 50 microparticles or air bubbles are present in the visual field of the microscope, measuring major axes of the microparticles or air bubbles, and calculating an average value. Use of a microscope having a length measuring function is preferable, but the sizes may be measured based on photographs taken using a camera.

The content of the inorganic microparticles in the resin composition is not especially limited, but is preferably 1 part by mass or more and 100 parts by mass or less, more preferably 2 parts by mass or more and 50 parts by mass or less, and still more preferably 2 parts by mass or more and 20 parts by mass or less, with respect to 100 parts by mass of the resin (a2).

With the content of the inorganic microparticles in the above-mentioned range, the engraving rate at laser engraving is little affected.

The inorganic microparticles are preferably a porous microparticles or a nonporous ultrafine particles.

The porous microparticle used in the present embodiment means a microparticle having micropores with a pore volume of 0.1 ml/g or more in the particle, or a microparticle having fine crevices.

That the resin composition comprising porous microparticles facilitates processing such as cutting, grinding and polishing when the surface of a printing layer is processed to obtain a desired surface roughness.

Use of the porous microparticles decreases tackiness such as cutting scraps produced during the processing to obtain a desired surface roughness, and facilitates precise processing of the surface of a printing layer.

The porous microparticles preferably have a specific surface area of 10 $m^2/g$ or more and 1,500 $m^2/g$ or less, an average pore diameter of 1 nm or more and 1,000 nm or less, a pore volume of 0.1 ml/g or more and 10 ml/g or less, and an oil absorption amount of 10 ml/100 g or more and 2,000 ml/100 g or less.

With the specific surface area of the porous microparticles in the above-mentioned range, for example, in the case of forming an image portion on an original printing plate by engraving using a laser, the porous microparticles can suitably absorb removed decomposed substances.

In the present embodiment, the specific surface area can be determined based on the BET equation from an absorption isotherm of nitrogen at -196°C.

In the present embodiment, the pore volume and the average pore diameter can be measured by the nitrogen absorption method.

In the present embodiment, the oil absorption amount can be measured according to JIS-K5101.

The number-average particle diameter of the porous microparticles is preferably 10 nm or more and 10 μm or less, more preferably 0.5 μm or more and 8 μm or less, and still more preferably 1 μm or more and 5 μm or less.

With the number-average particle diameter of the porous microparticles in the above-mentioned range, tackiness can be reduced in cutting, grinding and polishing, and the surface roughness of an original printing plate is little affected, allowing pattern formation by laser engraving without generating faults in printing images.

The shape of the porous microparticle is not especially limited, and include a spherical, flat, needle-like or amorphous shape, or a shape having protrusions on the surface.

The porous microparticles are preferably spherical particles, more specifically, at least 70% of the particles have a sphericity in the range of 0.5 to 1.

In the present embodiment, the sphericity refers to an index prescribing the degree of sphere of a porous

microparticle, and is determined by the ratio ($D_1/D_2$) of a maximum value $D_1$ of circles installed completely inside a projected figure of a porous microparticle to a minimum value $D_2$ of circles installed completely outside thereof. The true sphere has a sphericity of 1.0, and the 1.0 is the upper limit of sphericity.

The sphericity of the porous microparticles is preferably 0.5 or more and 1.0 or less, and more preferably 0.7 or more and 1.0 or less.

With the sphericity of the porous microparticle of 0.5 or more, the wear resistance as a printing plate is good.

Preferably 70% or more, more preferably 90% or more, of the porous microparticles have a sphericity of 0.5 or more.

In the present embodiment, the sphericity can be measured based on photographs taken using a scanning electron microscope. Then, the photographs are taken preferably in such a magnification that at least 100 particles are present in a monitor screen. The $D_1$ and $D_2$ described above are measured based on the photographs, and the photographs are preferably treated using a digitalizing device such as a scanner, and then data processed using image analysis software.

The ignition loss of the porous microparticle is preferably 5.0% or less.

With the ignition loss of the porous microparticle in the above-mentioned range, physical properties of a printed matter are little affected.

In the present embodiment, the ignition loss of the porous microparticle can be measured according to Din 3262 20.

The porous microparticle is not especially limited, but examples thereof include porous silica, mesoporous silica, silica-zirconia porous gel, porous alumina and porous glass.

As the porous microparticle, particles in which crevices of from several nanometers to several hundred nanometers are present between layers as seen in layered clay compounds may be used, and since the pore diameter of these particles cannot be defined, spacings of crevices present between layers are defined as a pore diameter in the present embodiment.

As the porous microparticle, particles whose interior is a cavity or spherical granules having a uniform pore diameter, such as silica sponge, may be used.

In the present embodiment, particles may be used which are subjected to a surface modification treatment of coating the surface of the porous microparticle with a silane coupling agent, a titanium coupling agent or other organic compounds to increase hydrophilicity or hydrophobicity of the particles.

These porous microparticles can be selected singly or as two or more thereof.

The nonporous ultrafine particle used in the present embodiment means a particle having a pore volume of less than 0.1 ml/g.

The number-average particle diameter of the nonporous ultrafine particles is a number-average particle diameter of a primary particles, and is preferably 10 nm or more and 500 nm or less, and more preferably 10 nm or more and 100 nm or less.

With the number-average particle diameter of the nonporous ultrafine particles in the above-mentioned range, the tackiness can be reduced in cutting, grinding and polishing, and the surface roughness of an original printing plate is little affected, allowing pattern formation by laser engraving without generating faults in printing images.

The nonporous ultrafine particle is an ultrafine particle which is an organometal compound a part of which is decomposed and modified into a metal component, and examples thereof include aluminum oxide, titanium oxide, cerium oxide, yttrium oxide, zinc oxide, silicon oxide, tin oxide, copper oxide, holmium oxide, bismuth oxide, cobalt oxide and indium tin oxide.

Easily available nonporous ultrafine particles are NanoTec® of C.I.Kasei Co., Ltd. and the like.

These.nonporous ultrafine particles can be selected singly or as two or more thereof.

[Additives]

The resin composition according to the present embodiment may further comprise additives.

The total amount of the additives in the resin composition is not especially limited, but is preferably 0.1 parts by mass or more and 50 parts by mass or less with respect to 100 parts by mass of a mixture of the resin (a1) and the resin (a2).

The additives include fluorine-containing monomers, petroleum waxes, monomers having a hydrocarbon chain, dyes, pigments, polymerization inhibitors, ultraviolet absorbents, lubricants, surfactants, plasticizers and perfumes.

Fluorine-containing monomers are not especially limited as long as these have a polymerizable functional group, but examples thereof include monomers having a double bond, a triple bond, an epoxy group, an oxetane skeleton or a ketene acetal skeleton.

Examples of the fluorine-containing monomers include straight chain or branched chain aliphatic fluoroolefins such as tetrafluoroethylene, hexafluoropropylene, vinylidene fluoride, trifluoroethylene, 1,2-difluoroethylene, vinyl fluoride, trifluoropropylene, chlorotrifluoroethylene, 3,3,3-trifluoropropene, 2-trifluoromethyl-3,3,3-trifluoro-1-propene and perfluoro(butylethylene); perfluoro(alkyl vinyl ether)s such as perfluoro(methyl vinyl ether), perfluoro(ethyl vinyl ether) and perfluoro(propyl vinyl ether); perfluoro(alkenyl vinyl ether)s such as perfluoro(1,3-dioxol) and perfluoro(butenyl vinyl ether); etheric oxygen atom-containing cyclic perfluoroolefins such as perfluoro(2,2-dimethyl-1,3-dioxol) and perfluoro(2-methylene-4-methyl-1,3-dioxolane); (perfluoroalkyl)ethyl acrylates such as (perfluorobutyl)ethyl acrylate, (perfluorohexyl)ethyl acrylate, (perfluoroheptyl)ethyl acrylate and (perfluorooctyl)ethyl acrylate; (perfluoroalkyl)ethyl methacrylates such as (perfluorobutyl)ethyl methacrylate, (perfluorohexyl)ethyl methacrylate, (perfluoroheptyl)ethyl methacrylate and (perfluorooctyl)ethyl methacrylate; and fluorostyrenes such as α-fluorostyrene, β-fluorostyrene, α,β-difluorostyrene, β,β-difluorostyrene, α,β,β-trifluorostyrene, α-trifluoromethylstyrene, 2,4,6-tri(trifluoromethyl)styrene, 2,3,4,5,6-pentafluorostyrene, perfluoro(styrene), and 2,3,4,5,6-pentafluoro-α-methylstyrene.

Above all, compounds having a long carbon chain, such as perfluorooctyl methacrylate, are preferable.

These fluorine-containing monomers may have functional groups other than the polymerizable functional group.

The petroleum waxes (paraffins) used in the present embodiment are roughly classified into n-paraffins, whose hydrocarbon chain is a straight chain, isoparaffins whose hydrocarbon chain is a branched chain, and cycloparaffins whose hydrocarbon chain is cyclic.

Above all, petroleum waxes having a melting point of preferably 65°C or lower, and more preferably 60°C or lower is preferable.

With the melting point of the petroleum waxes in the above-mentioned range, when the waxes are added to the resin composition, they are unlikely to be solidified.

Examples of the monomers having a hydrocarbon chain used in the present embodiment include vinyl esters of aliphatic or aromatic carboxylic acids, such as vinyl decanoate, vinyl stearate and vinyl palmitate; aliphatic or aromatic allyl esters such as allyl decanoate, allyl stearate, allyl palmitate and allyl stearate; and alkyl vinyl ethers such as vinyl ethyl ether and vinyl polyether.

Methods for colorizing the resin composition in order to improve the visibility thereof include use of dyes and pigments, and preferred specific pigments include "HELIOGEN BLUE D 6700"(trade name, made by BASF AG) and "PALIOGEN RED K 3580"(trade name, made by BASF AG).

Examples of the polymerization inhibitor include heavy metal inactivating agents such as amido-based ones and hydrazide-based ones, quenchers such as organic Ni-based ones, HALSs such as hindered piperidine-based ones, phenolic antioxidants such as hindered phenol-based ones and semihindered phenol-based ones, antioxidants such as phosphite-based ones, phosphonite-based ones and phosphorus-based ones, and antioxidants such as thioether-based ones and sulfur-based ones. Above all, hindered phenol-based antioxidants are preferable, and for example, "UV22" (made by Ciba Speciality Chemicals Corp.) is suitably used as a radical polymerization inhibitor.

Examples of the ultraviolet absorbent include ultraviolet absorbents such as benzophenone-based ones, triazine-based ones and benzotriazol-based ones.

[Laser-engraving original printing plate]

The laser-engraving original printing plate according to the present embodiment can be obtained by curing the resin composition according to the present embodiment.

In the case where the laser-engraving original printing plate has a support, the original printing plate has the support and a resin layer laminated on the support.

In the present embodiment, a method for manufacturing the laser-engraving original printing plate is preferably a method comprising the steps of: forming a resin layer of the resin composition according to the present embodiment; and curing the resin layer.

The step of forming a resin layer of the resin composition is not especially limited, and the resin layer can be formed using an existing method for forming a resin.

Examples of the step include a method in which a resin is extruded from a nozzle or a die by a machine such as a pump or an extruder, and the thickness is adjusted by a blade (casting method), and a method in which a resin is calender processed by a roll to adjust the thickness.

The formation may be carried out while the resin is being heated to the extent that the performance of the resin is not degraded. As required, a rolling process, a cutting process or the like may be carried out.

The step of forming the resin layer is preferably a step of laminating the resin composition on a support to form the resin layer.

The resin layer may be formed directly on a support of a printing plate, or the resin composition may be formed on an underlay called a back film composed of a material such as PET (polyethylene terephthalate) or nickel.

Formation of the resin layer by laminating the resin composition directly on a support allows for the formation as a seamless original printing plate.

An original printing plate may be formed using a sleeve-forming/engraving apparatus (an apparatus wherein

a liquid resin composition is applied on a cylindrical support and light is irradiated to induce crosslinking to cure the resin composition and which incorporate a laser source for laser engraving). Use of such an apparatus can achieve a process in a short time, which can never be thought of with conventional rubber sleeves needing a period of several weeks for forming processing, because immediately after the formation of a sleeve, laser engraving can be carried out to form a printing plate.

The resin composition according to the present embodiment is suitable for formation and curing by such a method.

In the present embodiment, methods for manufacturing a laser-engraving original printing plate includes a method comprising forming the resin composition to a sheet shape or cylindrical shape, and irradiating the resin composition formed as a resin layer with high energy active rays to cure the resin composition.

In the present embodiment, "high energy active rays" means light rays having a short wavelength, such as ultraviolet rays, electron beams, γ rays, X rays and molecule beams.

In the present embodiment, a light source to photocure a resin layer to make an original printing plate is not especially limited, but examples thereof include high pressure mercury lamps, extra-high pressure mercury lamps, ultraviolet fluorescent lamps, germicidal lamps, carbon arc lamps, xenon lamps and metal halide lamps.

Light irradiated to a laser-engraving original printing plate preferably has a wavelength of 200 nm to 400 nm. One type of light sources may be used, but two or more types thereof having different wavelengths may be used.

Two or more types of light sources are suitably used because the curability of a resin is improved in some cases when the resin layer is cured.

In the present embodiment, methods for manufacturing a laser-engraving original printing plate include a method comprising forming the resin composition to a sheet shape or a cylindrical shape, and heating the resin composition formed as a resin layer to cure the resin composition.

The hardness of a cured product of a thermal curing resin composition as the resin composition containing an organic peroxide as a thermopolymerization initiator can be made remarkably low as compared with a cured product of a photosensitive resin composition containing a photopolymerization initiator. Control of the temperature condition during thermal curing allows for setting the hardness in a broad range.

Making a thermal cure product of a low hardness can provide a good-quality printed matter in printing on low-grade paper having a high surface roughness, and in printing on corrugated board paper.

In the thermal curing step, heating is carried out preferably at 80°C or higher and 250°C or lower, more preferably at 80°C or higher and 200°C or lower, and still more preferably at 100°C or higher and 150°C or lower.

In the present embodiment, the above-mentioned heating temperature means a temperature of the surface of a resin layer.

With the heating temperature during thermal curing in the above-mentioned range, the size stability of the support can be secured.

In the case where a resin layer is laminated on a hollow cylindrical support, and heated and cured, this method is suitable because liquid sagging can be suppressed by carrying out the heating with the hollow cylindrical support being rotated.

In the above-mentioned step, as a method for heating the resin layer, at least one method selected from the group consisting of a method of irradiating thermal rays, a method of blowing hot air, a method in which the resin layer is exposed to a hot air-convecting atmosphere, and a method of bringing the resin layer into contact with a heated roll, is preferably used.

Particularly the method of irradiating thermal rays and the method of bringing the resin layer into contact with a heated roll are preferable from the viewpoint of ease of workability.

Thermal rays include near infrared rays and infrared rays.

[Support]

Examples of the support according to the present embodiment include sheet-shaped supports and hollow cylindrical supports.

The support is preferably a hollow cylindrical support, and more preferably a reinforced plastic hollow cylindrical support.

That the support is of a hollow cylindrical shape makes easy attachment/detachment of the support to/from a printing machine, and allows for more uniform coating by applying the resin composition while the support is being rotated around the axis, because the support is of a cylindrical shape.

That the support is a reinforced plastic hollow cylindrical support can maintain the adhesive force with an adhesive layer while holding the strength in addition to the above-mentioned advantages.

The reinforce plastic is preferably a fiber-reinforced plastic, and preferably contains at least one resin selected from the group consisting of epoxy resins, polyester resins, polyimide resins, polyurethane resins, polyamide resins,

polyketone resins, polysulfone resins and polyphenylene ether resins.

The fiber of the fiber-reinforced plastic is not especially limited, but the fiber-reinforced plastic preferably contains at least one fiber selected from the group consisting of polyester fibers, polyamide fibers, polyurethane fibers, polyimide fibers, polypropylene fibers, polyethylene fibers, polyacrylonitrile fibers, polyphenylene ether fibers, polyvinyl alcohol fibers, phenol fibers, fluororesin fibers, polyether ether ketone resins, vinylidene fibers, poly-p-phenylene bisoxazol fibers, polyphenylene sulfide fibers, polychlal fiber, polyketone fibers and synthetic pulp fibers.

The fiber-reinforced plastic may contain a fiber formed of an inorganic compound as a fiber, and examples of the fiber formed of an inorganic compound include glass, carbon, silicon nitride, boron nitride, silicon carbide, alumina, nickel, titanium, copper, iron, tungsten and chromium fibers.

Examples of short fibers formed of natural organic compounds include plant fibers such as bast fibers, vein fibers and cellulose, the fiber-reinforced plastic may contain the short fiber.

[Cushion layer]

The laser-engraving original printing plate according to the present embodiment may further comprise one or more layers of cushion layers between the laser-engraving original printing plate and the support.

The cushion layer is not especially limited, and any layer can be used as long as it is a resin layer having a rubber elasticity.

Examples of resins to become materials for the cushion layer include natural rubber materials, and synthetic rubber materials such as SBR, SBS and SIS, and soft plastic materials such as silicone rubber, urethane rubber, butyl rubber, fluororubber and polyethylene.

Sheet-shaped elastomers formed by photocuring resins may be used. Among these materials, preferable materials include, particularly, sheet materials composed of polyethylene or polyurethane as main components, used in printing applications. Use of commercially available cushion tapes for flexographic printing is convenient.

The thickness of the cushion layer is preferably 0.10 mm or more and 6.00 mm or less, more preferably 0.20 mm or more and 2.00 mm or less, and still more preferably 0.30 mm or more and 0.70 mm or less.

The specific gravity of the cushion layer is preferably 0.20 g/$cm^3$ or more and 0.90 g/$cm^3$ or less, more preferably 0.30 g/$cm^3$ or more and 0.70 g/$cm^3$ or less, and still more preferably 0.40 g/$cm^3$ or more and 0.60 g/$cm^3$ or less.

The cushion layer preferably has an ASKER-C hardness of 30 or more and 90 or less.

In the present embodiment, an adhesive layer may be provided between the cushion layer and the original printing plate, between the original printing plate and the support, or between the support and the cushion layer. Use of a tacky layer as the adhesive layer facilitates peeling the cushion layer off the cylindrical support after the cylindrical cushion has been used, and reusing the cylindrical support. The adhesive layer includes a double-sided tape (trade name: ST-416, made by 3M Co.)

In the present embodiment, the cushion layer preferably further contains a microparticle having a number-average particle diameter of 10 nm or more and 200 μm or less. Examples of such a microparticle include inorganic microparticles, organic microparticles and hollow microcapsules.

That the cushion layer contains the microparticle is likely to facilitate application of the cushion layer on the support because of improved thixotropy.

The number-average particle diameter of the microparticle is preferably 0.1 μm or more and 200 μm or less, more preferably 0.5 μm or more and 150 μm or less, and still more preferably 1.0 μm or more and 100 μm or less.

"Number-average particle diameter of a microparticle" in the present embodiment means an average value of values of major axes measured by microscopic observation.

In the present embodiment, the number-average particle diameter can be determined by adjusting such a microscopic magnification that at least approximately 50 microparticles or air bubbles are present in the visual field of a microscope, measuring major axes of the microparticles or air bubbles, and calculating the average value. Use of a microscope having a length-measuring function is preferable, but the size is preferably measured based on photographs taken using a camera.

Examples of materials of the inorganic microparticle include silica, alumina, calcium carbonate, zeolite, magnesium hydroxide and zirconium silicate.

The average particle diameter of the inorganic microparticle is preferably 10 nm or more and 30 μm or less, more preferably 0.1 μm or more and 20 μm or less, and still more preferably 0.5 μm or more and 10 μm or less.

In the case where the cushion layer contains an inorganic microparticle, the inorganic microparticle may be the same as the inorganic microparticle contained in the resin composition, or may be different from that.

Examples of the organic microparticle include, from the viewpoint of exhibiting a balance between the mechanical strength and the solvent resistance, microparticles having at least one skeleton selected from a polysiloxane skeleton, a polystyrene skeleton, a poly(meth)acrylate skeleton, a polyurethane skeleton and a polyacrylonitrile skeleton. Examples of such an organic microparticle include silicone rubber, crosslinked acrylic acid microparticles, crosslinked acrylic acid

porous microparticles and crosslinked polystyrenes.

In the present embodiment, "hollow microcapsule" means a microparticle of from 1 μm to several hundred micrometers, having a composite composition in which an outer shell and an inner core have different compositions.

Methods for manufacturing a hollow microcapsule include the interfacial polymerization method, the coacervation method, the interfacial precipitation method and the in-liquid drying method. In principle, a microparticulated core substance is dispersed in an appropriate medium, and then covered with a film of a microparticle.

The hollow microcapsule may be such that an inorganic microparticle is adhered on the surface of a hollow microcapsule-shaped organic microparticle. The presence of the inorganic microparticle of the surface decreases the solubility to a cushion layer, and enables the hollow microcapsule to be present in the cushion layer stably over a long period. The average particle diameter of the inorganic microparticle present on the surface is preferably 10 nm or more and 30 μm or less, more preferably 0.1 μm or more and 20 μm or less, and still more preferably 0.5 μm or more and 10 μm or less. Materials of the inorganic microparticle present on the surface include silica, alumina, calcium carbonate, zeolite, magnesium hydroxide and zirconium silicate.

[Peripheral length adjusting layer]

The laser-engraving original printing plate according to the present embodiment may comprise one or more layers of peripheral length adjusting layers between the laser-engraving original printing plate and the support.

In the present embodiment, in the case of providing a peripheral length adjusting layer, it is preferable that the thickness of the peripheral length adjusting layer can optionally be changed according to the repeat length in printing by a printing machine. The resin usable may be a resin which is solid at 20°C, but is preferably a liquid resin from the viewpoint that the thickness of the peripheral length adjusting layer can optionally be changed.

The liquid resin may contain a solvent, but since a process of removing the solvent becomes necessary, the liquid resin is preferably a non-solvent liquid resin. The case where a liquid resin is used can form a seamless layer having a uniform thickness. The viscosity at 20°C of the liquid resin is preferably 10 Pa·s or more and 10 kPa·s or less, and more preferably 500 Pa·s or more and 5 kPa·s or less.

In order to form a thick film, the above-mentioned viscosity range is preferable because there is a possibility that the film thickness changes due to generation of liquid sagging by the gravity. In order to make the formed film thickness very thin, the viscosity is desirably suppressed low. As a method for lowering the viscosity, a method of adding a solvent can be used as a simple method.

[Cutting/Grinding/Polishing]

When a printing surface of the laser-engraving original printing plate is processed, the surface is preferably subjected to a surface adjustment by at least one method selected from cutting, grinding and polishing.

Although the surface can be processed only by cutting, if a polishing process is carried out after a cutting step or a grinding step, the shape of the printing surface of the laser-engraving original printing plate can be adjusted more precisely, which is preferable.

Processing by cutting of the printing surface of the laser-engraving original printing plate is not especially limited, but examples of processing include processing by a blade of a lathe, a drilling machine, a milling machine, a shaper, a planing machine, an NC machine tool, or the like.

Processing by grinding of the printing surface of the laser-engraving original printing plate includes processing using a grindstone. Materials of the grinding stone used in grinding processing are not especially limited, but examples thereof include alumina-based or silicon carbide-based materials. Examples of the materials of the grinding stone include, for alumina-based ones, brown alumina, white alumina, rose pink alumina and pulverized alumina, and for silicon carbide-based ones, black silicon carbide and green silicon carbide.

With respect to the grain size of abrasive grains used in grinding processing, grindstones of #8 or higher and #5000 or lower are preferably used. Examples of the major component of binders to bind abrasive grains include feldspar-soluble clay/fluxes, Bakelite artificial resins, sodium silicate fluxes, natural rubber/artificial rubber/sulfur, shellac natural resins and metal foils.

Abrasive bodies used for polishing processing of the printing surface of the laser-engraving original printing plate are not especially limited, but examples thereof include abrasive papers, abrasive films such as lapping films and mirror films, and polishing wheels.

The materials of abrasives on the surface of the abrasive papers and the abrasive films are preferably at least one microparticle selected from metals, ceramics and carbon compounds. Examples of metal microparticles include comparatively hard materials such as chromium, titanium, nickel and iron. Examples of the ceramics include alumina, silica, silicon nitride, boron nitride, zirconia, zirconium silicate and silicon carbide. Materials of alumina-based abrasive grains include brown alumina-based abrasives, pulverized alumina-based abrasives, rose pink alumina-based abrasives,

white alumina-based abrasives and artificial emery abrasives. Materials of the silicon carbide-based abrasive grains include black silicon carbide-based abrasives and green silicon carbide-based abrasives. The carbon compounds include diamond and graphite. Artificial diamond is preferable as an abrasive.

Materials of other abrasives include glass-based abrasives such as glass beads, resin-based abrasives such as nylon, polycarbonate, polyester and methyl methacrylate, plant-based abrasives such as walnut husks, seeds of apricot and seeds of peach. Furthermore, use of abrasives in combination of an abrasive cloth and the above-mentioned abrasives is also possible.

The number-average particle diameter of the abrasive is preferably 0.1 μm or more and 100 μm or less, and more preferably 30 μm or more and 100 μm or less.

If the grain size of an abrasive is in the range of 100 μm or less, an original printing plate utilizable suitably for the printing evaluation can be simply fabricated. The preferable grain size is 9 μm or more and 30 μm or less.

Particularly, since the ink transferability to a printing object and the printing quality can be improved by reducing convexoconcaves on the surface of an obtained original printing plate, the average particle diameter of the abrasive is preferably 20 μm or less. From the viewpoint of reducing the time necessary for the surface processing and improving the productivity of an original printing plate, the average particle diameter of the abrasive is preferably 12 μm or less.

With respect to the grain size of the polishing wheel surface, the grain size of from #60 to #3000 is preferably used. Materials of the polishing wheel are not especially limited, and include iron, alumina, ceramics, carbon compounds, grindstones, tree, brushes, felt and cork.

The thickness and the material of a support for abrasive papers and abrasive films is not especially limited, but is preferably 1 μm or more and 1,000 μm or less, more preferably 10 μm or more and 500 μm or less, and still more preferably 25 μm to 125 μm.

With the thickness in the range of 25 μm or more and 125 μm or less, handleability such as winding-up is simple. The shape of the support is not especially limited, and includes roll, disc, sheet and belt shapes.

When polishing is carried out using an abrasive body, although the original printing plate surface can be polished even by dry polishing, in which a liquid is not interposed, if taking into consideration the polishing power, the uniformity of the original printing plate surface after polishing, the little generation of dusts and the removal of heat generated during polishing, it is preferable that an abrasive is brought into contact with an original printing plate while a liquid is being interposed. The liquid to be used is not especially limited, but examples thereof include petroleum, machine oil, alkali solutions and water.

Use of water as a liquid interposed in polishing makes the deterioration of an original printing plate less than use of other liquids, and facilitates the treatment of the waste liquid.

In the present embodiment, another preferable mode of the printing surface adjustment also includes a method in which microparticles, which are composed of at least one substance selected from metals, ceramics and carbon compounds, and have an average particle diameter of 0.1 μm or more and 100 μm or less, are made to collide with the original printing plate surface.

Methods of making a microparticle collide with an original printing plate are not especially limited, but examples thereof include sandblasting, shot blasting, air blast and blower blast. Materials of the microparticle are not especially limited, but examples thereof include glass-based particles such as glass beads, resin-based particles such as nylon, polycarbonate, polyester and methyl methacrylate, and plant-based particles such as walnut husks, seeds of apricot and seeds of peach.

[Laser engraving]

In the present embodiment, in the laser engraving, a relief image is fabricated on an original plate by making digital data of an image intended to be formed, and operating a laser device utilizing a computer.

The laser used in the laser engraving is not especially limited as long as the laser contains a wavelength which the original plate absorbs. In order to carrying out engraving in a high speed, a high-output laser is desirable, and lasers having an oscillating wavelength in an infrared or near infrared region, such as a carbon dioxide laser, a YAG laser, a semiconductor laser and a fiber laser, are preferable.

Among lasers, for example, an ultraviolet laser having an oscillating wavelength in an ultraviolet region, for example, an excimer laser, A YAG laser having a wavelength converted to the third or fourth harmonic, and a copper vapor laser, can carry out abrasion processing to cut bonds of organic molecules, and are thus suitable for microfabrication.

Among lasers, lasers having a remarkably high peak output, such as a femto-second laser, also can be used. Laser may be directed continuously or in pulses. Since resins generally exhibit absorption at a wavelength near 10 μm, in the case of using a carbon dioxide laser having an oscillating wavelength near 10 μm, there is no need particularly for addition of a component to aid the laser light absorption.

The YAG laser, the semiconductor laser and the fiber laser have an oscillating wavelength near 1 μm, but since

few organic substances exhibit light absorption in this wavelength region, it is suitable that a laser-engraving original printing plate is made by addition of a dye or a pigment as a component to aid the light absorption to the resin composition.

Examples of such a dye include poly(substituted)phthalocyanine compounds and metal-containing phthalocyanine compounds; cyanine compounds; squarylium dyes; chalcogenopyryloallylidene dyes; chloronium dyes; metal thiolate dyes; bis(charcogenopyrylo)polymethine dyes; oxyindolizine dyes; bis(aminoaryl)polymethine dyes; and merocyanine dyes and quinoid dyes.

Examples of the pigment include dark-colored inorganic pigments such as carbon black, graphite, copper chromite, chromium oxide, cobalt chromium aluminate and iron oxide, metal powders such as iron, aluminum, copper and zinc, and the metal powders doped with Si, Mg, P, Co, Ni, Y or the like. These dyes and pigments may be used singly or in combination of two or more with any forms such as a multilayer structure.

The engraving by a laser can be carried out in an oxygen-containing gas, generally in the presence of air or in an air flow, but can also be carried out in carbon dioxide gas or nitrogen gas. After the completion of the engraving, powdery or liquid substances generated in a trace amount on a relief printing plate may be removed by an appropriate method, for example, a method of washing away with a solvent or water containing a surfactant, a method of applying an aqueous detergent by a high-pressure spray, and a method of applying a high-pressure steam.

After a convexoconcave pattern is formed by laser engraving, a post-exposure may be carried out in which the printing plate surface having the pattern formed is irradiated with light of 200 nm to 450 nm in wavelength. The post-exposure is a method effective for removing tackiness from the surface. The post-exposure may be carried out in any environment of in the air, in an inert gas atmosphere, or in water. This is especially effective in the case where a resin composition used contains a hydrogen abstraction-type photopolymerization initiator. Further, the printing plate surface may be treated with a treating liquid containing a hydrogen abstraction-type photopolymerization initiator before the post-exposure step, and then exposed. Alternatively, the printing plate surface may be exposed while the printing plate is immersed in a treating liquid containing a hydrogen abstraction-type photopolymerization initiator. The method disclosed in Japanese Patent Laid-Open No. 2005-212144 and the like is also preferable

[Laser-engraved printing plate]

The laser-engraved printing plate according to the present embodiment is a printing plate obtained by laser engraving a printing pattern on a laser-engraving original printing plate surface.

Forms of the printing plate according to the present embodiment are not especially limited, and the printing plate can be used as every printing plate, such as flexographic printing plates, resin letterpress printing plates, and blankets used for offset, dry offset, reverse offset or gravure offset, but can be used suitably as a flexographic printing plate.

Examples

Hereinafter, the present embodiment will be described further in detail by way of Examples and Comparative Examples, but the present embodiment is not limited to these Examples only. Measurement methods used in the present embodiment were as follows.

(1) Measurement of the viscosity

The viscosity of the resin composition was measured at 20°C using a Brookfield type viscometer (product name: B8H, made by Tokyo Keiki Co., Ltd., Japan). The viscosities of the resin (a1) and the resin (a2) were measured at 50°C using the same instrument. The unit was Pa·s.

Hereinafter, "resin (a)" collectively means the resin (a1) and the resin (a2).

(2) Measurement of the number-average molecular weight

The number-average molecular weight of the resin (a) was determined in terms of molecular weight-known polystyrenes using the gel permeation chromatography (GPC method). The measurement was carried out by using a high performance GPC apparatus (product name: HLC-8020, made by Tosoh Corp., Japan) and a polystyrene-filled column (product name: TSKgel GMHXL, made by Tosoh Corp., Japan) and by developing with tetrahydrofuran (THF). The temperature of the column was set at 40°C. Samples to be injected into the GPC apparatus were prepared as THF solutions of 1 % by mass in resin concentration, and the injection amount was set at 10 μL. A detector used was a resin ultraviolet absorption detector, and monitor light used was light of 254 nm.

(3) Measurement of the number of the polymerizable unsaturated group

The average number per one molecule of the resin (a) of the polymerizable unsaturated group present in the molecule was determined through the molecular structure analysis using the nuclear magnetic resonance spectroscopy (NMR method, product name: Avance600, made by Bruker BioSpin Co.) after removal of unreacted low molecular components by the liquid chromatography.

(4) Formation of the resin composition on a support

A cushion bridge sleeve (product name: OptiFlex-Cushion Bridge, PU50, made by AKL Flexo Technik GmbH, Germany) was used whose inner diameter was 152.905 mm; outer diameter, 175.187 mm; and width, 1,000 mm in order to adjust the inner diameter difference from a cylinder of a printing machine. The PU50 of the cushion bridge sleeve had an ASKER-C hardness of 78.

As a support of the resin, a fiber-reinforced plastic sleeve (product name: OptiFlex-Basic, made by AKL Flexo Technik GmbH, Germany) was used. The inner diameter was 175.18 mm; the outer diameter was 175.88 mm; and the width was 1,000 mm. The resin composition was applied on the support by a doctor blade, and irradiated with ultraviolet rays of a metal halide lamp (product name: M056-L21, made by Eye Graphics Co., Ltd.) at 12,000 mJ/cm$^2$ (a cumulative energy amount using a UV meter and a UV-35-APR filter) to cure the resin composition, thus obtaining an original printing plate. The outermost surface of the original printing plate was adjusted by grinding and polishing such that the peripheral length after the curing became 560 mm. A laser-engraving original printing plate for evaluating the printability was thus fabricated.

For the resin containing a thermopolymerization initiator added, after the above-mentioned applying the resin composition on the support, the resin was held at 140°C for 2 hours to cure the resin, and thereafter, the outermost surface of the original printing plate was adjusted by grinding and polishing such that the peripheral length became 560 mm.

(5) Laser engraving

Laser engraving was carried out using a carbon dioxide gas laser engraver (product name: ZED-mini-1000, made by ZED Instruments, Britain; mounting a carbon dioxide laser of 250 W output, made by Coherent Inc., the US). Engraved images were fabricated in 120 lines per inch. Patterns were fabricated whose halftone dots were 1%, 2%, 3%, 4%, 5%, 6%, 7%, 8%, 9%, 10%, 12%, 15%, 20%, 25%, 30%, 40%, 50%, 60%, 70%, 80%, 90%, 95% and 100%. Separately, a pattern having a gradation of 1% to 99% was fabricated. Patterns were fabricated whose convex lines were 60 μm wide, 100 μm wide, 150 μm wide, 200 μm wide, 250 μm wide, and 500 μm wide. Patterns were fabricated whose concave lines were 60 μm wide, 100 μm wide, 150 μm wide, 200 μm wide, 250 μm wide and 500 μm wide. Convex characters were fabricated in Mincho letters and Gothic letters of 2 points, 3 points, 4 points, 6 points and 8 points. Concave characters were fabricated in Mincho letters and Gothic letters of 2 points, 3 points, 4 points, 6 points and 8 points.

(6) Quality of the laser engraving

The relief depth was measured to evaluate the quality of the laser-engraved original printing plate. "Relief depth" means a height difference between a printing portion (relief surface) and a non-printing portion (back surface) of a letterpress printing plate. If the relief depth was set large, the area of a relief surface of a pattern of a fine halftone dot portion could not be secured, and the shape became out of shape and unclear, and therefore, the relief depth was set at 0.5 mm.

The reproducibility of a plate was evaluated by observing whether the shape of dots was a circular cone. "Reproducibility of a plate" means an accuracy of transferring a printing image to a letterpress printing plate. The reproducibility of a plate was evaluated by observing whether the shape of dots was a circular cone.

(7) Ink-contamination suppression effect

The ink-contamination suppression effect was evaluated by the time until ink contamination occurred, and the extent of the contamination with the ink after printing.

Printing was carried out using a printing machine (product name: FlexPress16S, made by Fischer & Krecke GmbH & Co., Germany) and an ink (product name: XS-812, made by Dainippon Ink and Chemicals, Inc.); the viscosity of the ink was adjusted to 8.4 sec with a Zahn cup #4; a printing object used was a corona-treated opalescent polyethylene having a thickness of 45 μm; the line number of an anilox roll was 750 lpi, and the cell volume thereof was 5 cc; and the

printing rate was set at 200 m/min.

The time until the halftone dot portion on the printing object became contaminated with the ink was measured. If the time until the ink contamination occurred was 20 min or longer, the printing plate tends be suitable as a printing plate suppressing ink contamination.

The ink contamination on the plate surface was evaluated by observing the remaining ink on the plate surface after the printing. The case where almost no ink contamination was observed was evaluated as A; the case where ink contamination slightly occurred, as B; and the case where ink contamination outstandingly occurred, as C.

(8) Tensile properties (tensile strength, elongation)

The tensile properties (tensile strength, elongation) were measured using product name "AGS-100G" made by Shimadzu Corp. according to JIS K-6301.

For a printing plate for the tensile property test, a transparent, surface-silicon treated polyester film having a thickness of 100 μm was adhered to a fiber-reinforced plastic cylindrical support having an outer diameter of 230.00 mm, a width of 300 mm and a thickness of 1 mm. The resin composition was so applied on the polyester film by a doctor blade that the thickness became 1.0 mm, and irradiated with ultraviolet rays of a metal halide lamp (product name: M056-L21, made by Eye Graphics Co., Ltd.) at 12,000 $mJ/cm^2$ (a cumulative energy amount using a UV meter and a UV-35-APR filter).

(9) OH value of polycarbonate diols

In the present embodiment, the OH value is an index for a hydroxyl group contained in a compound having the hydroxyl group, and the OH value is preferably 2 to 500 mgKOH/g. The OH value was measured by the following method.

12.5 g of acetic anhydride was measured up with 50 mL of pyridine to prepare an acetylation reagent.

1.0 g of a sample (a polycarbonate diol) was precisely weighed in a 100-mL recovery flask.

2 mL of the acetylation reagent and 4 mL of toluene were added thereto by a whole pipette; thereafter, a cooling tube was attached; and the solution was agitated and heated at 100°C for 1 hour.

1 mL of distilled water was added thereto by a whole pipette, and the solution was further heated and agitated for 10 min.

The solution was cooled for 2 to 3 min; 5 mL of ethanol was added thereto; and 2 to 3 drops of a 1 % phenolphthalein/Nethanol solution as an indicator was added thereto. Thereafter, the solution was titrated with a 0.5-mol/L ethanolic potassium hydroxide.

As a blank test, 2 mL of the acetylation reagent, 4 mL of toluene and 1 mL of distilled water were charged in a 100-mL recovery flask, and the solution was heated and agitated for 10 min, and thereafter titrated in the same way.

Based on the results, the OH value of the polycarbonate diol was calculated using the following expression (i).

$$\text{OH value (mgKOH/g)} = \{(b - a) \times 28.05 \times f\} / e \qquad (i)$$

a: titration amount (mL) of the sample
b: titration amount (mL) of the blank test
e: sample mass (g)
f: factor of the titration liquid

(10) Measurement of $^{29}$Si-NMR (nuclear magnetic resonance spectrum)

The equivalent amount of a functional group of a silicone oil was determined by the $^{29}$Si-NMR measurement. The $^{29}$Si-NMR measurement of the silicone oil was conducted using product name "Biospin DSX400" made by Bruker BioSpin Co. The measurement was conducted under the conditions of: observation nucleus: $^{29}$Si; observation frequency: 79.49 MHz; cumulative times: 2,400 times; pulse width: 4.5 μsec; waiting time: 30 sec; MAS (magic angular rotation speed): 3,500 Hz; magic angle spinning: 5,000 Hz; pulse program: hpdec (high power decoupling); and sample tube diameter: 7 mmθ.

[Manufacture Example 1: Preparation of a resin (α1)] [0149]

413.72 g of "KF-6003" (number-average molecular weight: 5,100, OH value: 22.0), which is a both-terminal type carbinol-modified reactive silicone oil, made by Shin-Etsu Chemical Co., Ltd., and 11.05 g of tolylene diisocyanate

were added to a 1-L separable flask equipped with a thermometer, an agitator, and a reflux device, and allowed to react at 80°C under heating for about 3 hours. Thereafter, 5.49 g of 2-methacryloyloxyethyl isocyanate was added thereto, and allowed to react further for about 3 hours to prepare a resin (α1) containing methacrylic groups at the terminals (about 2.0 groups of the polymerizable unsaturated group on average per one molecule in the molecule) and having a number-average molecular weight of about 24,000.

The resin contained a siloxane bond in the main chain, and was starch syrup-like at 20°C; and the resin flowed when an external force was applied, and the shape did not recover to the original shape even if the external force was relieved.

[Manufacture Example 2: Preparation of a resin (α2)]

413.72 g of "KF-6003" (number-average molecular weight: 5,100, OH value: 22.0), which is a both-terminal type carbinol-modified reactive silicone oil, made by Shin-Etsu Chemical Co., Ltd., and 11.81 g of tolylene diisocyanate were added to a 1-L separable flask equipped with a thermometer, an agitator, and a reflux device, and allowed to react at 80°C under heating for about 3 hours. Thereafter, 4.13 g of 2-methacryloyloxyethyl isocyanate was added thereto, and allowed to react further for about 3 hours to prepare a resin (α2) containing methacrylic groups at the terminals (about 2.0 groups of the polymerizable unsaturated group on average per one molecule in the molecule) and having a number-average molecular weight of about 32,000.

The resin contained a siloxane bond in the main chain, and was starch syrup-like at 20°C; and the resin flowed when an external force was applied, and the shape did not recover to the original shape even if the external force was relieved.

[Manufacture Example 3: Preparation of a resin (α3)]

413.72 g of "KF-6003" (number-average molecular weight: 5,100, OH value: 22.0), which is a both-terminal type carbinol-modified reactive silicone oil, made by Shin-Etsu Chemical Co., Ltd., and 12.58 g of tolylene diisocyanate were added to a 1-L separable flask equipped with a thermometer, an agitator, and a reflux device, and allowed to react at 80°C under heating for about 3 hours. Thereafter, 2.76 g of 2-methacryloyloxyethyl isocyanate was added thereto, and allowed to react further for about 3 hours to prepare a resin (α3) containing methacrylic groups at the terminals (about 2.0 groups of the polymerizable unsaturated group on average per one molecule in the molecule) and having a number-average molecular weight of about 48,000.

The resin contained a siloxane bond in the main chain, and was starch syrup-like at 20°C; and the resin flowed when an external force was applied, and the shape did not recover to the original shape even if the external force was relieved.

[Manufacture Example 4: Preparation of a resin (α4)]

579.63 g of "X-22-160AS" (number-average molecular weight: 935, OH value: 120.0), which is a both-terminal type carbinol-modified reactive silicone oil, made by Shin-Etsu Chemical Co., Ltd., and 98.15 g of tolylene diisocyanate were added to a 1-L separable flask equipped with a thermometer, an agitator, and a reflux device, and allowed to react at 80°C under heating for about 3 hours. Thereafter, 17.53 g of 2-methacryloyloxyethyl isocyanate was added thereto, and allowed to react further for about 3 hours to prepare a resin (α4) containing methacrylic groups at the terminals (about 2.0 groups of the polymerizable unsaturated group on average per one molecule in the molecule) and having a number-average molecular weight of about 12,000.

The resin contained a siloxane bond in the main chain, and was starch syrup-like at 20°C; and the resin flowed when an external force was applied, and the shape did not recover to the original shape even if the external force was relieved.

[Manufacture Example 5: Preparation of a resin (α5)]

579.63 g of "X-22-160AS" (number-average molecular weight: 935, OH value: 120.0), which is a both-terminal type carbinol-modified reactive silicone oil, made by Shin-Etsu Chemical Co., Ltd., and 103.04 g of tolylene diisocyanate were added to a 1-L separable flask equipped with a thermometer, an agitator, and a reflux device, and allowed to react at 80°C under heating for about 3 hours. Thereafter, 8.83 g of 2-methacryloyloxyethyl isocyanate was added thereto, and allowed to react further for about 3 hours to prepare a resin (α5) containing methacrylic groups at the terminals (about 2.0 groups of the polymerizable unsaturated group on average per one molecule in the molecule) and having a number-average molecular weight of about 24,000.

The resin contained a siloxane bond in the main chain, and was starch syrup-like at 20°C; and the resin flowed

when an external force was applied, and the shape did not recover to the original shape even if the external force was relieved.

[Manufacture Example 6: Preparation of a resin (α6)]

413.72 g of "X-22-160AS" (number-average molecular weight: 935, OH value: 120.0), which is a both-termirial type carbinol-modified reactive silicone oil, made by Shin-Etsu Chemical Co., Ltd., and 11.81 g of tolylene diisocyanate were added to a 1-L separable flask equipped with a thermometer, an agitator, and a reflux device, and allowed to react at 80°C under heating for about 3 hours. Thereafter, 4.13 g of 2-methacryloyloxyethyl isocyanate was added thereto, and allowed to react further for about 3 hours to prepare a resin (α6) containing methacrylic groups at the terminals (about 2.0 groups of the polymerizable unsaturated group on average per one molecule in the molecule) and having a number-average molecular weight of about 32,000.
The resin contained a siloxane bond in the main chain, and was starch syrup-like at 20°C; and the resin flowed when an external force was applied, and the shape did not recover to the original shape even if the external force was relieved.

[Manufacture Example 7: Preparation of a resin (α7)]

A resin (α7) having a number-average molecular weight of about 24,000 was prepared by the same method as in Manufacture Example 5, except for no addition of 2-methacryloyloxyethyl isocyanate.
The resin contained a siloxane bond in the main chain, and was starch syrup-like at 20°C; and the resin flowed when an external force was applied, and the shape did not recover to the original shape even if the external force was relieved.

[Manufacture Example 8: Preparation of a resin (α8)]

578.65 g of "X-22-167B" (number-average molecular weight: 3,340, functional group equivalent weight: 1,670 g/mol), which is a both-terminal type mercapto-modified reactive silicone oil, made by Shin-Etsu Chemical Co., Ltd., and 25.80 g of tolylene diisocyanate were added to a 1-L separable flask equipped with a thermometer, an agitator, and a reflux device, and allowed to react at 80°C under heating for about 3 hours. Thereafter, 7.82 g of 2-methacryloyloxyethyl isocyanate was added thereto, and allowed to react further for about 3 hours to prepare a resin (α8) containing methacrylic groups at the terminals (about 2.0 groups of the polymerizable unsaturated group on average per one molecule in the molecule) and having a number-average molecular weight of about 24,000.
The resin contained a siloxane bond in the main chain, and was starch syrup-like at 20°C; and the resin flowed when an external force was applied, and the shape did not recover to the original shape even if the external force was relieved.

[Manufacture Example 9: Preparation of a resin (α9)]

322.22 g of "X-22-1821" (number-average molecular weight: 2,953, OH value: 38), which is a both-terminal type phenol-modified reactive silicone oil, made by Shin-Etsu Chemical Co., Ltd., and 16.55 g of tolylene diisocyanate were added to a 1-L separable flask equipped with a thermometer, an agitator, and a reflux device, and allowed to react at 80°C under heating for about 3 hours. Thereafter, 4.38 g of 2-methacryloyloxyethyl isocyanate was added thereto, and allowed to react further for about 3 hours to prepare a resin (α9) containing methacrylic groups at the terminals (about 2.0 groups of the polymerizable unsaturated group on average per one molecule in the molecule) and having a number-average molecular weight of about 24,000.
The resin contained a siloxane bond in the main chain, and was starch syrup-like at 20°C; and the resin flowed when an external force was applied, and the shape did not recover to the original shape even if the external force was relieved.

[Example of Manufacture 1: Preparation of a resin (α10)]

1,318 g of "PCDL® T4672" (number-average molecular weight: 2,059, OH value: 54.5), which is a polycarbonate diol, made by Asahi Kasei Chemicals Corp., and 76.8 g of tolylene diisocyanate were added to a 2-L separable flask equipped with a thermometer, an agitator, and a reflux device, and allowed to react at 80°C under heating for about 3 hours. Thereafter, 52.6 g of 2-methacryloyloxyethyl isocyanate was added thereto, and allowed to react further for about 3 hours to prepare a resin (α10) containing methacrylic groups at the terminals (about 1.7 groups of the polymerizable unsaturated group on average per one molecule in the molecule) and having a number-average molecular weight of

about 7,000.

The resin was starch syrup-like at 20°C; and the resin flowed when an external force was applied, and the shape did not recover to the original shape even if the external force was relieved.

[Example of Manufacture 2: Preparation of a resin (α11)]

1,351 g of "PCDL® T4692" (number-average molecular weight: 2,033, OH value: 55.2), which is a polycarbonate diol, made by Asahi Kasei Chemicals Corp., and 80.17 g of tolylene diisocyanate were added to a 2-L separable flask equipped with a thermometer, an agitator, and a reflux device, and allowed to react at 80°C under heating for about 3 hours. Thereafter, 63.44 g of 2-methacryloyloxyethyl isocyanate was added thereto, and allowed to react further for about 3 hours to prepare a resin (α11) containing methacrylic groups at the terminals (about 1.7 groups of the polymerizable unsaturated group on average per one molecule in the molecule) and having a number-average molecular weight of about 7,000.

The resin was starch syrup-like at 20°C; and the resin flowed when an external force was applied, and the shape did not recover to the original shape even if the external force was relieved.

[Example of Manufacture 3: Preparation of a resin (α12)]

1,324 g of "C-2015N" (number-average molecular weight: 2,011, OH value: 55.8), which is a polycarbonate diol, made by Kuraray Co., Ltd., and 79.77 g of tolylene diisocyanate were added to a 2-L separable flask equipped with a thermometer, an agitator, and a reflux device, and allowed to react at 80°C under heating for about 3 hours. Thereafter, 62.23 g of 2-methacryloyloxyethyl isocyanate was added thereto, and allowed to react further for about 3 hours to prepare a resin (α12) containing methacrylic groups at the terminals (about 1.7 groups of the polymerizable unsaturated group on average per one molecule in the molecule) and having a number-average molecular weight of about 7,000.

The resin was starch syrup-like at 20°C; and the resin flowed when an external force was applied, and the shape did not recover to the original shape even if the external force was relieved.

[Example of Manufacture 4: Preparation of a resin (α13)]

214 g (2.01 mol) of diethylene glycol and 186 g (2.12 mol) of ethylene carbonate were charged in a 500-mL four-necked flask equipped with a distilling column packed with a structured packing Heli Pack packing No. 3 (made by Takenaka Wire Cloth Co., Ltd.) and having a packing height of 300 mm and an inner diameter of 30 mm and with a fractionating head, and agitated and dissolved at 70°C; the system interior was replaced by nitrogen; and thereafter, 0.177 g of tetrabutoxytitanium as a catalyst was added thereto.

The flask was heated in an oil bath to carry out the reaction for 22 hours while a part of refluxed liquid was extracted from the fractionating head so that the internal temperature of the flask became 145 to 150°C and the pressure became 2.5 to 3.5 kPa.

Thereafter, the packed distilling column was removed, and replaced by a simple distilling apparatus; and the internal temperature of the flask was raised to 170°C and the pressure was reduced to 0.2 kPa to distill out diethylene glycol and ethylene carbonate remaining in the flask over 1 hour.

Then, the internal temperature of the flask was set to 170°C and the pressure was set to made 0.1 kPa and the reaction was further carried out for 5 hours. By this reaction, 174 g of a polycarbonate diol which is viscous liquid at room temperature was obtained.

The obtained polycarbonate diol had an OH value of 60.9 and a number-average molecular weight of 1,843.

65.0 g of the polycarbonate diol and 0.05 g of monobutyl phosphate were charged in a 300-mL separable flask equipped with an agitator, and agitated at 80°C for 3 hours to inactivate the tetrabutoxytitanium.

Thereafter, 4.63 g of tolylene diisocyanate, 0.07 g of 2,6-di-tert-butyl-4-methylphenol, 0.01 g of adipic acid and 0.001 g of di-n-butyltin dilaurate were added thereto, and agitated under a dry air atmosphere at 80°C for 3 hours.

Thereafter, 2.77 g of 2-methacryloyloxyethyl isocyanate and 0.001 g of di-n-butyltin dilaurate were added thereto, and agitated under a dry air atmosphere at 80°C for 2 hours.

At this stage, it was confirmed by the infrared spectroscopy that the terminal hydroxyl groups of the polycarbonate diol were linked through urethane bonds, and had double bonds, thus a resin (α13) containing methacrylic groups at the terminals (about 1.8 groups of the polymerizable unsaturated group on average per one molecule in the molecule) and having a number-average molecular weight of about 7,000 was prepared.

The above-mentioned steps were repeated 5 times to obtain 1,600 g of the resin (α13).

[Example of Manufacture 5: Preparation of a resin (α14)]

450 g of a polyester diol, "Kuraray Polyol P3010" (number-average molecular weight: 3,161, OH value: 35.5), made by Kuraray Co., Ltd., and 21.52 g of tolylene diisocyanate were added to a 1-L separable flask equipped with a thermometer, an agitator, and a reflux device, and allowed to react at 80°C under heating for about 3 hours. Thereafter, 6.44 g of 2-methacryloyloxy isocyanate was added thereto, and allowed to react further for about 3 hours to prepare a resin (α14) containing methacrylic groups at the terminals (about 2 groups of the polymerizable unsaturated group on average per one molecule in the molecule) and having a number-average molecular weight of about 25,000.

The resin was starch syrup-like at 20°C; and the resin flowed when an external force was applied, and the shape did not recover to the original shape even if the external force was relieved.

In the obtained resin (α14), α-position hydrogen atoms are hydrogen atoms (the chemical shift value in 1H-NMR: 4.1 to 4.2 ppm) at sites where ester bonds in the molecular main chain are formed, hydrogen atoms (the chemical shift value in 1 H-NMR: 4.1 to 4.2 ppm) at sites where methacrylate ester bonds in the molecular terminals are formed, and hydrogen atoms (the chemical shift value in 1H-NMR: 1.8 ppm) bonded to carbon atoms to which branched methyl groups are bonded. From the cumulative value of the NMR measurement, the content of α-position hydrogen atoms was determined to be 25.2%. Since a hydrogen atom (α-position hydrogen atom) bonded to a carbon atom bonded directly to a methyl group, and hydrogen atoms bonded to either of carbon atoms in the immediate vicinity of the carbon atom bonded directly to a methyl group exhibit nearly the same chemical shift, a value obtained by dividing the cumulative value of hydrogen atoms of methyl groups by 3 was defined as a cumulative value of the α-position hydrogen atom.

Compounds and compositions of resins used in the Manufacture Examples and the Examples of Manufacture are shown in Table 1 and Table 2.

[Table 1]

| | Compound having a siloxane bond, used for synthesis of the resin (a1) | | Chemical bond which the resin (a1) has | Number-average molecular weight |
|---|---|---|---|---|
| | Trade name | Number-average molecular weight | | |
| Resin (α1) | KF-6003 | 5100 | Siloxane bond | 24000 |
| Resin (α2) | KF-6003 | 5100 | Siloxane bond | 32000 |
| Resin (α3) | KF-6003 | 5100 | Siloxane bond | 48000 |
| Resin (α4) | X-22-160AS | 935 | Siloxane bond | 12000 |
| Resin (α5) | X-22-160AS | 935 | Siloxane bond | 24000 |
| Resin (α6) | X-22-160AS | 935 | Siloxane bond | 32000 |
| Resin (α7) | X-22-160AS | 935 | Siloxane bond | 24000 |
| Resin (α8) | X-22-1678 | 3340 | Siloxane bond | 24000 |
| Resin (α9) | X-22-1821 | 2953 | Siloxane bond | 24000 |

[Table 2]

| | Compound used for synthesis of the resin (a2) | | Chemical bond which the resin (a2) has | Number-average molecular weight |
|---|---|---|---|---|
| | Trade name | Number-average molecular weight | | |
| Resin (α10) | PCDL T4672 | 2059 | Carbonate bond | 7000 |
| Resin (α11) | PCDL T4692 | 2033 | Carbonate bond | 7000 |
| Resin α12) | C-2015N | 2011 | Carbonate bond | 7000 |
| Resin (α13) | - | 1843 | Carbonate bond | 7000 |
| Resin (α14) | Kuraray Polyol P3010 | 3161 | Ester bond | 25000 |

[Example 1]

A resin composition (A1) liquid at 20°C was fabricated by adding 5 parts by mass of the resin (α2) as a resin (a1), and 0.8 part by mass of benzophenone (in Table, abbreviated to BP) being a hydrogen-abstraction-type photopolymerization initiator and 3.0 parts by mass of 2,2-dimethoxy-2-phenylacetophenone (in Table, abbreviated to DMPAP) being a disintegration-type photopolymerization initiator as photopolymerization initiators (c), to 100 parts by mass of the resin (α10) as a resin (a2), and further adding thereto 7.7 parts by mass of "Sylosphere® C-1504" (number-average particle diameter: 4.5 μm; specific surface area: 520 $m^2$/g; average pore diameter: 12 nm; pore volume: 1.5 ml/g; ignition loss: 2.5% by mass; oil absorption amount: 290 mL/100 g; almost all particles of Sylosphere C-1504 being a porous spherical silica added had a sphericity of 0.9 or higher by observation by a scanning electron microscope; hereinafter, the properties of Sylosphere C-1504 were the same in each Example; and in Table and hereinafter, abbreviated to C-1504), made by Fuji Silysia Chemical, Ltd., as inorganic microparticles, and 0.9 part by mass of 2,6-di-t-butyl-4-methylphenol (in Table, abbreviated to DBMP), and 1.5 parts by mass of bis(1,2,2,6,6-pentamethyl-4-pyperidyl)sebacate (in Table, abbreviated to BPPS), as additives.

The viscosity of the resin composition (A1) measured by a Brookfield type viscometer was 3,000 Pa·s or less at 20°C.

The formation of the resin composition (A1) on a support and the laser engraving were carried out by the methods according to (4) and (5) described above. The relief depth was 0.5 mm, and the shape of dots was a circular cone.

In the printing test according to (7) described above, the time until ink contamination occurred was 30 min. Slight ink contamination was observed on the plate surface.

Further in order to evaluate mechanical properties of a printing plate using an original printing plate obtained from the resin composition (A1), a printing plate was fabricated by the method described in (8) described above, and the tensile properties of the obtained printing plate were measured.

The results are shown in Table 3.

[Example 2]

A resin composition (A2) liquid at 20°C was fabricated in the same way as in Example 1, except for using the resin (α4) as a resin (a1).

The viscosity of the resin composition (A2) measured by a Brookfield type viscometer was 3,000 Pa·s or less at 20°C.

The formation of the resin composition (A2) on a support and the laser engraving were carried out by the methods described above. The relief depth was 0.5 mm, and the shape of dots was a circular cone.

In the printing test described above, the time until ink contamination occurred was 30 min. Slight ink contamination was observed on the plate surface.

Further in order to evaluate mechanical properties of a printing plate using an original printing plate obtained from the resin composition (A2), a printing plate was fabricated by the method described in (8) described above, and the tensile properties of the obtained printing plate were measured. The results are shown in Table 3.

[Example 3]

A resin composition (A3) liquid at 20°C was fabricated by adding 5 parts by mass of the resin (α1) as a resin (a1), 50 parts by mass of phenoxyethyl methacrylate (in Table, abbreviated to POH) as an organic compound (b), and 0.8 part by mass of benzophenone being a hydrogen-abstraction-type photopolymerization initiator and 3.0 parts by mass of 2,2-dimethoxy-2-phenylacetophenone being a disintegration-type photopolymerization initiator as photopolymerization initiators (c), to 100 parts by mass of the resin (α10) as a resin (a2), and further adding thereto 7.7 parts by mass of C-1504 as inorganic microparticles, and 0.9 part by mass of 2,6-di-t-butyl-4-methylphenol and 1.5 parts by mass of bis(1,2,2,6,6-pentamethyl-4-pyperidyl)sebacate as additives.
The viscosity of the resin composition (A3) measured by a Brookfield type viscometer was 3,000 Pa·s or less at 20°C.
The formation of the resin composition (A3) on a support and the laser engraving were carried out by the methods described above. The relief depth was 0.5 mm, and the shape of dots was a circular cone.
In the printing test described above, the time until ink contamination occurred was 30 min. Slight ink contamination was observed on the plate surface.
Further in order to evaluate mechanical properties of a printing plate using an original printing plate obtained from the resin composition (A3), a printing plate was fabricated by the method described in (8) described above, and the tensile properties of the obtained printing plate were measured.
The results are shown in Table 3.

[Example 4]

A resin composition (A4) liquid at 20°C was fabricated in the same way as in Example 3, except for using the resin (α2) as a resin (a1).
The viscosity of the resin composition (A4) measured by a Brookfield type viscometer was 3,000 Pa·s or less at 20°C.
The formation of the resin composition (A4) on a support and the laser engraving were carried out by the methods described above. The relief depth was 0.5 mm, and the shape of dots was a circular cone.
In the printing test described above, the time until ink contamination occurred was 30 min. Slight ink contamination was observed on the plate surface.
Further in order to evaluate mechanical properties of a printing plate using an original printing plate obtained from the resin composition (A4), a printing plate was fabricated by the method described in (8) described above, and the tensile properties of the obtained printing plate were measured. The results are shown in Table 3.

[Example 5]

A resin composition (A5) liquid at 20°C was fabricated in the same way as in Example 3, except for using the resin (α3) as a resin (a1).
The viscosity of the resin composition (A5) measured by a Brookfield type viscometer was 3,000 Pa·s or less at 20°C.
The formation of the resin composition (A5) on a support and the laser engraving were carried out by the methods described above. The relief depth was 0.5 mm, and the shape of dots was a circular cone.
In the printing test described above, the time until ink contamination occurred was 30 min. Slight ink contamination was observed on the plate surface.
Further in order to evaluate mechanical properties of a printing plate using an original printing plate obtained from the resin composition (A5), a printing plate was fabricated by the method described in (8) described above, and the tensile properties of the obtained printing plate were measured. The results are shown in Table 3.

[Example 6]

A resin composition (A6) liquid at 20°C was fabricated in the same way as in Example 3, except for using the resin (α4) as a resin (a1). The viscosity of the resin composition (A6) measured by a Brookfield type viscometer was 3,000 Pa·s or less at 20°C.
The formation of the resin composition (A6) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained

from the resin composition (A6), a printing plate was fabricated by the method described in (8) described above, and the tensile properties of the obtained printing plate were measured. The results are shown in Table 3.

[Example 7]

A resin composition (A7) liquid at 20°C was fabricated in the same way as in Example 3, except for using the resin ($\alpha$5) as a resin (a1).
The viscosity of the resin composition (A7) measured by a Brookfield type viscometer was 3,000 Pa·s or less at 20°C.
The formation of the resin composition (A7) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained from the resin composition (A7), a printing plate was fabricated by the method described in (8) described above, and the tensile properties of the obtained printing plate were measured. The results are shown in Table 3.

[Example 8]

A resin composition (A8) liquid at 20°C was fabricated in the same way as in Example 3, except for using the resin ($\alpha$6) as a resin (a1).
The viscosity of the resin composition (A8) measured by a Brookfield type viscometer was 3,000 Pa·s or less at 20°C.
The formation of the resin composition (A8) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained from the resin composition (A8), a printing plate was fabricated by the method described in (8) described above, and the tensile properties of the obtained printing plate were measured. The results are shown in Table 3.

[Example 9]

A resin composition (A9) liquid at 20°C was fabricated in the same way as in Example 7, except for using the resin ($\alpha$11) as a resin (a2)
The viscosity of the resin composition (A9) measured by a Brookfield type viscometer was 3,000 Pa·s or less at 20°C.
The formation of the resin composition (A9) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained from the resin composition (A9), a printing plate was fabricated by the method described in (8) described above, and the tensile properties of the obtained printing plate were measured. The results are shown in Table 3.

[Example 10]

A resin composition (A10) liquid at 20°C was fabricated in the same way as in Example 7, except for using the resin ($\alpha$12) as a resin (a2).
The viscosity of the resin composition (A10) measured by a Brookfield type viscometer was 3, 000 Pa·s or less at 20°C.
The formation of the resin composition (A10) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained from the resin composition (A10), a printing plate was fabricated by the method described in (8) described above, and the tensile properties of the obtained printing plate were measured. The results are shown in Table 3.

[Example 11]

A resin composition (A11) liquid at 20°C was fabricated in the same way as in Example 7, except for adding 10 parts by mass of trimethylolpropane trimethacrylate (in Table, abbreviated to TMPT) as an organic compound (b), to 100 parts by mass of the resin (a2).
The viscosity of the resin composition (A11) measured by a Brookfield type viscometer was 3,000 Pa·s or less at 20°C
The formation of the resin composition (A11) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.
Further in order to evaluate mechanical properties of a printing plate using an original printing plate obtained from the resin composition (A11), a printing plate was fabricated by the method described in (8) described above, and the tensile properties of the obtained printing plate were measured. The results are shown in Table 3.

[Table 3]

| | Tensile properties | |
|---|---|---|
| | Tensile strength ($kgf/cm^2$) | Elongation (%) |
| Example 1 | 360 | 165 |
| Example 2 | 369 | 182 |
| Example 3 | 330 | 152 |
| Example 4 | 340 | 157 |
| Example 5 | 352 | 163 |
| Example 6 | 335 | 153 |
| Example 7 | 344 | 167 |
| Example 8 | 350 | 170 |
| Example 9 | 324 | 152 |
| Example 10 | 321 | 145 |
| Example 11 | 389 | 121 |

From the results in Table 3, printing plates obtained in the Examples had mechanical properties excellent for use as the printing plate.

[Example 12]

A resin composition (A12) liquid at 20°C was fabricated in the same way as in Example 3, except for adding no C-1504.
The viscosity of the resin composition (A12) measured by a Brookfield type viscometer was 3,000 Pa·s or less at 20°C.
The formation of the resin composition (A12) on a support and the laser engraving were carried out by the methods described above. The relief depth was 0.5 mm, and the shape of dots was a circular cone.
In the printing test described above, the time until ink contamination occurred was 40 min. Almost no ink contamination was observed on the plate surface.

[Example 13]

A resin composition (A13) liquid at 20°C was fabricated in the same way as in Example 3, except for using the resin ($\alpha$7) as a resin (a1).
The viscosity of the resin composition (A13) measured by a Brookfield type viscometer was 3,000 Pa·s or less at 20°C.
The formation of the resin composition (A13) on a support and the laser engraving were carried out by the

methods described above. The relief depth was 0.5 mm, and the shape of dots was a circular cone.

In the printing test described above, the time until ink contamination occurred was 40 min. Almost no ink contamination was observed on the plate surface.

[Example 14]

A resin composition (A14) liquid at 20°C was fabricated by adding 5 parts by mass of the resin ($\alpha$1) as a resin (a1), 50 parts by mass of phenoxyethyl methacrylate as an organic compound (b), and 1.3 parts by mass of 1,1-di(t-butyl peroxide)cyclohexane ("Perhexa C-75®", made by NOF Corp., Japan; 10-hour half-value period temperature: 90.7°C)(in Table, abbreviated to C75EB) as a thermopolymerization initiator, to 100 parts by mass of the resin ($\alpha$10) as a resin (a2), and further adding thereto 7.7 parts by mass of C-1504.

The viscosity of the resin composition (A14) measured by a Brookfield type viscometer was 3,000 Pa·s or less at 20°C.

In the printing test described above, the time until ink contamination occurred was 45 min. Almost no ink contamination was observed on the plate surface.

[Example 15]

A resin composition (A15) liquid at 20°C was fabricated in the same way as in Example 3, except for using 3 parts by mass of the resin (a1) as a resin (a1).

The viscosity of the resin composition (A15) measured by a Brookfield type viscometer was 3,000 Pa·s or less at 20°C.

The formation of the resin composition (A15) on a support and the laser engraving were carried out by the methods described above. The relief depth was 0.5 mm, and the shape of dots was a circular cone.

In the printing test described above, the time until ink contamination occurred was 35 min. Almost no ink contamination was observed on the plate surface.

[Example 16]

A resin composition (A16) liquid at 20°C was fabricated in the same way as in Example 3, except for using the resin ($\alpha$13) as a resin (a2), and 25 parts by mass of phenoxyethyl methacrylate as an organic compound (b), to 100 parts by mass of the resin ($\alpha$13)

The viscosity of the resin composition (A16) measured by a Brookfield type viscometer was 3,000 Pa·s or less at 20°C.

The formation of the resin composition (A16) on a support and the laser engraving were carried out by the methods described above. The relief depth was 0.5 mm, and the shape of dots was a circular cone.

In the printing test described above, the time until ink contamination occurred was 45 min. Slight ink contamination was observed on the plate surface.

[Examples 17]

A resin composition (A17) liquid at 20°C was fabricated in the same way as in Example 3, except for using the resin ($\alpha$14) as a resin (a2).

The viscosity of the resin composition (A17) measured by a Brookfield type viscometer was 3,000 Pa·s or less at 20°C.

The formation of the resin composition (A17) on a support and the laser engraving were carried out by the methods described above. The relief depth was 0.5 mm, and the shape of dots was a circular cone.

In the printing test described above, the time until ink contamination occurred was 45 min. Slight ink contamination was observed on the plate surface.

[Example 18]

A resin composition (A18) liquid at 20°C was fabricated in the same way as in Example 3, except for using the resin ($\alpha$8) as a resin (a1).

The viscosity of the resin composition (A18) measured by a Brookfield type viscometer was 3,000 Pa·s or less at 20°C.

The formation of the resin composition (A18) on a support and the laser engraving were carried out by the methods described above. The relief depth was 0.5 mm, and the shape of dots was a circular cone.

In the printing test described above, the time until ink contamination occurred was 45 min. Almost no ink contamination was observed on the plate surface.

[Example 19]

A resin composition (A19) liquid at 20°C was fabricated in the same way as in Example 3, except for using the resin ($\alpha$9) as a resin (a1).
The viscosity of the resin composition (A19) measured by a Brookfield type viscometer was 3,000 Pa·s or less at 20°C.
The formation of the resin composition (A19) on a support and the laser engraving were carried out by the methods described above. The relief depth was 0.5 mm, and the shape of dots was a circular cone.
In the printing test described above, the time until ink contamination occurred was 45 min. Almost no ink contamination was observed on the plate surface.

[Comparative Example 1]

A resin composition (A20) liquid at 20°C was fabricated by adding 50 parts by mass of phenoxyethyl methacrylate as an organic compound (b), and 0.8 part by mass of benzophenone being a hydrogen-abstraction-type photopolymerization initiator and 3.0 parts by mass of 2,2-dimethoxy-2-phenylacetophenone being a disintegration-type photopolymerization initiator as photopolymerization initiators (c), to 100 parts by mass of the resin ($\alpha$10), and further adding thereto 0.9 part by mass of 2,6-di-t-butyl-4-methylphenol and 1.5 parts by mass of bis(1,2,2,6,6-pentamethyl-4-pyperidyl)sebacate, as additives.
The viscosity of the resin composition (A20) measured by a Brookfield type viscometer was 3,000 Pa.s or less at 20°C.
The formation of the resin composition (A20) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 2]

A resin composition (A21) liquid at 20°C was fabricated in the same way as in Comparative Example 1, except for further adding 1.5 parts by mass of a methylstyryl-modified silicone oil "KF-410" (in Table, abbreviated to KF-410), made by Shin-Etsu Chemical Co., Ltd., as an additive.
The viscosity of the resin composition (A21) measured by a Brookfield type viscometer was 3,000 Pa·s or less at 20°C.
The formation of the resin composition (A21) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 3]

A resin composition (A22) liquid at 20°C was fabricated in the same way as in Comparative Example 1, except for altering the amount of the methylstyryl-modified silicone oil "KF-410", made by Shin-Etsu Chemical Co., Ltd., as an additive, to 3.0 parts by mass.
Since in the resin composition (A22), a liquid substance separated, the fabrication of an original printing plate was stopped. The separated main component was KF-410.

[Comparative Example 4]

A resin composition (A23) liquid at 20°C was fabricated in the same way as in Example 16, except for adding 1.5 parts by mass of a methylstyryl-modified silicone oil "KF-410", made by Shin-Etsu Chemical Co., Ltd., as an additive, and adding no resin a1.
The viscosity of the resin composition (A23) measured by a Brookfield type viscometer was 3,000 Pa·s or less at 20°C.
The formation of the resin composition (A23) on a support and the laser engraving were carried out by the methods described above. The relief depth was 0.5 mm, and the shape of dots was a circular cone.

In the printing test described above, the time until ink contamination occurred was 5 min or less. Outstanding ink contamination was observed on the plate surface.

[Comparative Example 5]

A resin composition (A24) liquid at 20°C was fabricated in the same way as in Example 17, except for adding 1.5 parts by mass of a methylstyryl-modified silicone oil "KF-410", made by Shin-Etsu Chemical Co., Ltd., as an additive, and adding no resin a1.
The viscosity of the resin composition (A24) measured by a Brookfield type viscometer was 3,000 Pa·s or less at 20°C.
The formation of the resin composition (A24) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 6]

A resin composition (A25) liquid at 20°C was fabricated in the same way as in Comparative Example 1, except for further adding 7.7 parts by mass of C-1504 as inorganic microparticles.
The viscosity of the resin composition (A25) measured by a Brookfield type viscometer was 3,000 Pa·s or less at 20°C.
The formation of the resin composition (A25) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 7]

A resin composition (A26) liquid at 20°C was fabricated in the same way as in Comparative Example 6, except for using the resin ($\alpha$11) as a resin (a2).
The viscosity of the resin composition (A26) measured by a Brookfield type viscometer was 3,000 Pa·s or less at 20°C.
The application of the resin composition (A26) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 8]

A resin composition (A27) liquid at 20°C was fabricated in the same way as in Comparative Example 6, except for using the resin ($\alpha$12) as a resin (a2).
The application of the resin composition (A27) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.

[Comparative Example 9]

A resin composition (A28) liquid at 20°C was fabricated in the same way as in Comparative Example 6, except for adding 10 parts by mass of trimethylolpropane trimethacrylate as an organic compound (b), to 100 parts by mass of the resin (a2).
The viscosity of the resin composition (A28) measured by a Brookfield type viscometer was 3,000 Pa·s or less at 20°C.
The application of the resin composition (A28) on a support and the laser engraving were carried out by the methods described above. The relief depth was 0.5 mm, and the shape of dots was a circular cone.
In the printing test described above, the time until ink contamination occurred was 5 min or less. Outstanding ink contamination was observed on the plate surface.
The compositions and the test results of the Examples and the Comparative Examples described above are shown in Table 4 and Table 5.

[Table 4]

| | Resin (a1) | | Resin (a2) | | Organic compound (b) | | | Pholopolymerization Initiator (c) | | Thermopolymerization Initiator (d) | Inorganic microparticle | Additive | | | Evaluation items | |
|---|---|---|---|---|---|---|---|---|---|---|---|---|---|---|---|---|
| | Resin used | Parts by mass | Resin used | Parts by mass | Nameof the compound | Number-average molecular weight | Parts by mass | DMPAP | BP | C75E6 | C-1504 | DEMP | BPPS | KF-410 | ink contamination after printing | Time until ink contamination occurred |
| Exemple 1 | Resin (α2) | 5 | Resin (α10) | 100 | | | | 3 | 0.8 | | 7.7 | 0.9 | 1.5 | | B | 30 min |
| Example 2 | Resin (α4) | 5 | Resin (α10) | 100 | | | | 3 | 0.8 | | 7.7 | 0.9 | 1.5 | | B | 30 min |
| Example 3 | Resin (α1) | 5 | Resin (α10) | 100 | POH | 204 | 50 | 3 | 0.8 | | 7.7 | 0.9 | 1.5 | | B | 30 min |
| Examples 4 | Resin (α2) | 5 | Resin (α10) | 100 | POH | 204 | 50 | 3 | 0.8 | | 7.7 | 0.9 | 1.5 | | B | 30 min |
| Example 5 | Resin (α3) | 5 | Resin (α10) | 100 | POH | 204 | 50 | 3 | 0.8 | | 7.7 | 0.9 | 1.5 | | B | 30 min |
| Example 6 | Resin (α4) | 5 | Resin (α10) | 100 | POH | 204 | 50 | 3 | 0.8 | | 7.7 | 0.8 | 1.5 | | A | 45 min |
| Example 7 | Resin (α5) | 5 | Resin (α10) | 100 | POH | 204 | 50 | 3 | 0.8 | | 7.7 | 0.9 | 1.5 | | A | 45 min |
| Example 8 | Resin (α6) | 5 | Resin (α10) | 100 | POH | 204 | 50 | 3 | 0.8 | | 7.7 | 0.9 | 1.5 | | A | 45 min |
| Example 9 | Rash (α5) | 5 | Resin (α11) | 100 | POH | 204 | 50 | 3 | 0.8 | | 7.7 | 0.9 | 1.5 | | A | 45 min |
| Exemple 10 | Resin (α5) | 5 | Resin (α12) | 100 | POH | 204 | 50 | 3 | 0.8 | | 7.7 | 0.9 | 1.5 | | A | 45 min |
| Example 11 | Resin (α5) | 5 | Resin (α10) | 100 | TMPT | 338 | 10 | 3 | 0.8 | | 7.7 | 0.9 | 1.5 | | A | 45 min |
| Example 12 | Resin (α1) | 5 | Resin (α10) | 100 | POH | 204 | 50 | 3 | 0.8 | | | 0.9 | 1.5 | | A | 40 min |

(continued)

| | Resin (a1) | | Resin (a2) | | Organic compound (b) | | | Pholopolymerization Initiator (c) | | Thermopolymerization Initiator (d) | Inorganic microparticle | Additive | | | Evaluation items | |
|---|---|---|---|---|---|---|---|---|---|---|---|---|---|---|---|---|
| | Resin used | Parts by mass | Resin used | Parts by mass | Nameof the compound | Number-average molecular weight | Parts by mass | DMPAP | BP | C75E6 | C-1504 | DEMP | BPPS | KF-410 | ink contamination after printing | Time until ink contamination occurred |
| Example 13 | Resin (α7) | 5 | Resin (α10) | 100 | POH | 204 | 50 | 3 | 0.8 | | 7.7 | 0.9 | 1.5 | | A | 40 min |
| Example 14 | Resin (α1) | 5 | Resin (α10) | 100 | POH | 204 | 50 | | | 1.3 | 7.7 | | | | A | 45 min |
| Example 15 | Resin (α1) | 3 | Resin (α10) | 100 | POH | 204 | 50 | 3 | 0.8 | | 7.7 | 0.9 | 1.5 | | A | 35 min |
| Example 16 | Resin (α1) | 5 | Resin (α13) | 100 | POH | 204 | 25 | 3 | 0.5 | | 7.7 | 0.9 | 1.5 | | A | 45 min |
| Example 17 | Resin (α1) | 5 | Resin (α14) | 100 | POH | 204 | 50 | 3 | 0.8 | | 7.7 | 0.9 | 1.5 | | A | 45 min |
| Example 18 | Resin (α8) | 5 | Resin (α10) 0) | 100 | POH | 204 | 50 | 3 | 0.8 | | 7.7 | 0.9 | 1.5 | | A | 45 min |
| Example 19 | Resin (α9)ØJ | 5 | Resin (α10) | 100 | POH | 204 | 50 | 3 | 0.8 | | 7.7 | 0.9 | 1.5 | | A | 45 min |

[Table 5]

| | Resin (a1) | | Resin (a2) | | Organic compound (b) | | | Photopolymerization Initiator (c) | | Thermopolymerization Initiator (d) | Inorganic microparticle | Additive | | | Evaluation items | |
|---|---|---|---|---|---|---|---|---|---|---|---|---|---|---|---|---|
| | Resin used | Parts by mass | Resin used | Parts by mass | Name of the compound | Number-average molecular weight | Parts by mass | DMPAP | BP | C75EB | C-1504 | DBMP | BPPS | KF-410 | Ink contamination after printing | Time until Ink contamination occur red |
| Comparative Example 1 | | | Resin (α10) | 100 | POH | 204 | 50 | 3 | 0.8 | | | 0.9 | 1.5 | | C | 5 min or less |
| Camparative Example 2 | | | Resin (α10) | 100 | POH | 204 | 50 | 3 | 0.8 | | | 0.9 | 1.5 | 1.5 | C | 5 min or less |
| Comparative Example 3 | | | Resin (α10) | 100 | POH | 204 | 50 | 3 | 0.8 | | | 0.9 | 1.5 | 3 . | - | - |
| Comparative Example 4 | | | Resin (α13) | 100 | POH | 204 | 25 | 3 | 0.8 | | 7.7 | 0.9 | 1.5 | 1.5 | C | 5 min or less |
| Compaarative Example 5 | | | Resin (α14) | 100 | POH | 204 | 50 | 3 | 0.8 | | 7.7 | 0.9 | 1.5 | 1.5 | C | 5 min or less |
| Comparative Example 6 | | | Resin (α10) | 100 | POH | 204 | 50 | 3 | 0.8 | | 7.7 | 0.9 | 1.5 | 1.5 | C | 5 min or less |
| Comparative Example 7 | | | Resin (α11) | 100 | POH | 204 | 50 | 3 | 0.8 | | 7.7 | 0.9 | 1.5 | 1.5 | C | 5 min or less |
| Comparative Example 8 | | | Resin (α12) | 100 | POH | 204 | 50 | 3 | 0.8 | | 7.7 | 0.9 | 1.5 | 1.5 | C | 5 min or less |

(continued)

| | Resin (a1) | | Resin (a2) | | Organic compound (b) | | | Photopolymerization Initiator (c) | | Thermopolymerization Initiator (d) | Inorganic microparticle | Additive | | | Evaluation items | |
|---|---|---|---|---|---|---|---|---|---|---|---|---|---|---|---|---|
| | Resin used | Parts by mass | Resin used | Parts by mass | Name of the compound | Number-average molecular weight | Parts by mass | DMPAP | BP | C75EB | C-1504 | DBMP | BPPS | KF-410 | Ink contamination after printing | Time until Ink contamination occur red |
| Comparative Example 9 | | | Resin ($\alpha$10) | 100 | TMPT | 338 | 10 | 3 | 0.8 | | 7.7 | 0.9 | 1.5 | 1.5 | C | 5 min or less |

From the results in Table 4 and Table 5, the use of resin compositions of Examples comprising the resin (a1) and the resin (a2) could provide original printing plates excellent in the ink-contamination suppression effect. It was also revealed that in the case where a printing plate was made from the original printing plate, the printing plate had a mechanical strength exhibiting no problem from a practical standpoint. A laser-engraving original printing plate composed of a resin composition in which a repeating unit contained in the resin (a1) and containing a siloxane bond had a number-average molecular weight of 500 or more and 10,000 or less exhibited superior ink-contamination suppression effect as a laser-engraved printing plate.

By contrast, an original printing plate obtained using the resin composition in Comparative Example 1 comprising no resin containing a siloxane bond as the resin (a1) exhibited no ink-contamination suppression effect.

Also in Comparative Examples 2 to 9 containing a silicone oil, since the original printing plates do not contain a siloxane bond as a part of resin, the original printing plates obtained did not exhibit a sufficient ink-contamination suppression effect.

The present invention is based on Japanese Patent Application No. 2008-35030, filed on February 15, 2008, the subject of which is incorporated herein by reference.

Industrial Applicability

The present invention can provide a laser-engraving original printing plate and a laser-engraved printing plate excellent in the ink-contamination suppression effect.

The laser-engraving original printing plate and the laser-engraved printing plate according to the present invention are suitable for flexographic printing, and have an industrial applicability to the field of the printing technology.

## Claims

**1.** A resin composition comprising:

a resin (a1) having a siloxane bond, a number-average molecular weight of 500 or more and 300,000 or less and two or more -CO-NH- bonds; and
a resin (a2) having no siloxane bond and having a number-average molecular weight of 1,000 or more and 300,000 or less.

**2.** The resin composition according to claim 1, wherein the resin (a1) has a polymerizable unsaturated group and has a number-average molecular weight of 1,300 or more and 300,000 or less, and the resin (a2) has a polymerizable unsaturated group.

**3.** The resin composition according to claim 1 or 2, further comprising an organic compound (b) having a polymerizable unsaturated group and having a number-average molecular weight of less than 1,000.

**4.** The resin composition according to any one of claims 1 to 3, further comprising a photopolymerization initiator (c) .

**5.** The resin composition according to any one of claims 1 to 4, wherein the resin (a1) has a repeating unit having a number-average molecular weight of 500 or more and 10,000 or less and having a siloxane bond.

**6.** The resin composition according to any one of claims 1 to 5, wherein the resin (a2) has a repeating unit having at least one bond selected from the group consisting of a carbonate bond, a urethane bond and an ester bond.

**7.** The resin composition according to any one of claims 3 to 6, wherein 20% by mass or more of the total amount of the organic compound (b) is at least one selected from the group consisting of alicyclic derivatives and aromatic derivatives.

**8.** The resin composition according to any one of claims 4 to 7, wherein the photopolymerization initiator (c) is at least one selected from the group consisting of hydrogen-abstraction-type photopolymerization initiators and disintegration-type photopolymerization initiators.

**9.** The resin composition according to any one of claims 1 to 8, wherein the resin composition is liquid at 20°C.

**10.** The resin composition according to any one of claims 1 to 9, further comprising inorganic microparticles having a

number-average particle diameter of 0.01 μm or more and 10 μm or less.

**11.** A laser-engraving original printing plate obtainable by curing a resin composition according to any one of claims 1 to 10.

**12.** The laser-engraving original printing plate according to claim 11, wherein a printing surface of the laser-engraving original printing plate is surface adjusted by at least one method selected from the group consisting of cutting, grinding and polishing.

**13.** A laser-engraved printing plate, obtained by laser engraving a laser-engraving original printing plate according to claims 11 or 12.

**Patentansprüche**

**1.** Harzzusammensetzung, enthaltend:

ein Harz (a1) mit einer Siloxanbindung, einem Zahlenmittel des Molekulargewichts von 500 oder mehr und 300000 oder weniger und zwei oder mehr -CO-NH-Bindungen; und
ein Harz (a2) ohne Siloxanbindung und mit einem Zahlenmittel des Molekulargewichts von 1000 oder mehr und 300000 oder weniger.

**2.** Harzzusammensetzung nach Anspruch 1, wobei das Harz (a1) eine polymerisierbare ungesättigte Gruppe aufweist und ein Zahlenmittel des Molekulargewichts von 1300 oder mehr und 300000 oder weniger hat, und wobei das Harz (a2) eine polymerisierbare ungesättigte Gruppe aufweist.

**3.** Harzzusammensetzung nach Anspruch 1 oder 2, welche weiterhin eine organische Verbindung (b) umfasst, die eine polymerisierbare ungesättigte Gruppe aufweist und ein Zahlenmittel des Molekulargewichts von weniger als 1000 hat.

**4.** Harzzusammensetzung nach einem der Ansprüche 1 bis 3, welche weiterhin einen Photopolymerisationsinitiator (c) enthält.

**5.** Harzzusammensetzung nach einem der Ansprüche 1 bis 4, wobei das Harz (a1) eine Wiederholungseinheit mit einem Zahlenmittel des Molekulargewichts von 500 oder mehr und 10000 oder weniger aufweist und eine Siloxanbindung aufweist.

**6.** Harzzusammensetzung nach einem der Ansprüche 1 bis 5, wobei das Harz (a2) eine Wiederholungseinheit mit mindestens einer Bindung aufweist, die aus der Gruppe ausgewählt ist, bestehend aus einer Carbonatbindung, einer Urethanbindung und einer Esterbindung.

**7.** Harzzusammensetzung nach einem der Ansprüche 3 bis 6, wobei 20 Massen-% oder mehr der Gesamtmenge der organischen Verbindung (b) mindestens eine ist, die aus der Gruppe ausgewählt ist, welche aus alizyklischen Derivaten und aromatischen Derivaten besteht.

**8.** Harzzusammensetzung nach einem der Ansprüche 4 bis 7, worin der Photopolymerisationsinitiator (c) mindestens einer ist, der aus der Gruppe ausgewählt ist, die aus Photopolymerisationsinitiatoren vom Wasserstoffabstraktionstyp und Photopolymerisationsinitiatoren vom Zersetzungstyp besteht.

**9.** Harzzusammensetzung nach einem der Ansprüche 1 bis 8, wobei die Harzzusammensetzung bei 20°C flüssig ist.

**10.** Harzzusammensetzung nach einem der Ansprüche 1 bis 9, welche weiterhin anorganische Mikroteilchen mit einem Zahlen-mittel des Teilchendurchmessers von 0,01 μm oder mehr und 10 μm oder weniger enthält.

**11.** Lasergravierbare Originaldruckplatte, erhältlich durch Härten einer Harzzusammensetzung nach einem der Ansprüche 1 bis 10.

**12.** Lasergravierbare Originaldruckplatte nach Anspruch 11, wobei eine Oberfläche einer Druckoberfläche der lasergravierbaren Originaldruckplatte durch mindestens ein Verfahren eingestellt wird, ausgewählt aus der Gruppe, bestehend aus Schneiden, Schleifen und Polieren.

13. Lasergravierte Druckplatte, erhalten durch Lasergravieren einer lasergravierbaren Originaldruckplatte nach Anspruch 11 oder 12.

**Revendications**

1. Composition de résine comprenant :

   une résine (a1) présentant une liaison siloxane, un poids moléculaire moyen en nombre supérieur ou égal à 500 et inférieur ou égal à 300 000 et deux ou plusieurs liaisons -CO-NH- ; et
   une résine (a2) ne présentant pas de liaison siloxane et ayant un poids moléculaire moyen en nombre supérieur ou égal à 1 000 et inférieur ou égal à 300 000.

2. Composition de résine selon la revendication 1, dans laquelle la résine (a1) comporte un groupe insaturé polymérisable et a un poids moléculaire moyen en nombre supérieur ou égal à 1 300 et inférieur ou égal à 300 000, et la résine (a2) comporte un groupe insaturé polymérisable.

3. Composition de résine selon la revendication 1 ou 2, comprenant en outre un composé organique (b) ne comportant pas de groupe insaturé polymérisable et ayant un poids moléculaire moyen en nombre inférieur à 1 000.

4. Composition de résine selon l'une quelconque des revendications 1 à 3, comprenant en outre un amorceur de photopolymérisation (c).

5. Composition de résine selon l'une quelconque des revendications 1 à 4, dans laquelle la résine (a1) comporte un motif répétitif ayant un poids moléculaire moyen en nombre supérieur ou égal à 500 et inférieur ou égal à 10 000 et présentant une liaison siloxane.

6. Composition de résine selon l'une quelconque des revendications 1 à 5, dans laquelle la résine (a2) comporte un motif répétitif comportant au moins une liaison choisie dans le groupe constitué d'une liaison carbonate, d'une liaison uréthane et d'une liaison ester.

7. Composition de résine selon l'une quelconque des revendications 3 à 6, dans laquelle 20 % en masse ou plus de la quantité totale du composé organique (b) est au moins un composé choisi dans le groupe constitué des dérivés alicycliques et des dérivés aromatiques.

8. Composition de résine selon l'une quelconque des revendications 4 à 7, dans laquelle l'amorceur de photopolymérisation (c) est au moins un composé choisi dans le groupe constitué des amorceurs de photopolymérisation de type abstraction d'hydrogène et des amorceurs de photopolymérisation de type désintégration.

9. Composition de résine selon l'une quelconque des revendications 1 à 8, dans laquelle la composition de résine est liquide à 20 °C.

10. Composition de résine selon l'une quelconque des revendications 1 à 9, comprenant en outre des microparticules inorganiques ayant un diamètre des particules moyen en nombre supérieur ou égal à 0,01 $\mu$m et inférieur ou égal à 10 $\mu$m.

11. Plaque de gravure originale au laser pouvant être obtenue en durcissant une composition de résine selon l'une quelconque des revendications 1 à 10.

12. Plaque de gravure originale au laser selon la revendication 11, dans laquelle une surface d'impression de la plaque de gravure originale au laser est ajustée en surface par au moins un procédé choisi dans le groupe constitué de la découpe, du meulage et du polissage.

13. Plaque d'impression au laser, obtenue par gravure laser d'une plaque de gravure originale au laser selon les revendications 11 ou 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005070691 A
- JP 9146264 A
- EP 1223192 A1
- JP 7239548 A
- JP 2005212144 A
- JP 2008035030 A


### Non-patent literature cited in the description


- Polymer Data Handbook-Fundamental Edition. Baifukan Co., Ltd, 1986
- Photosensitive Polymer. Kodansha Ltd, 1977, 228
- Encyclopedia of Polymer Science and Engineering. John Wiley & Sons, 1988, vol. 11, 1